# FASCICULE DE BREVET EUROPEEN

(11) **EP 2 286 158 B1**
(45) Date de publication et mention de la délivrance du brevet: **16.09.2015**
(21) Numéro de dépôt: 09769482.2
(22) Date de dépôt: 27.05.2009
(51) Int. Cl.: F24F 12/00, F24F 13/30

(54) **DISPOSITIF ÉCHANGEUR DE CHALEUR DOUBLE FLUX**
DOPPELFLUSS-WÄRMETAUSCHERVORRICHTUNG
DOUBLE-FLOW HEAT EXCHANGER DEVICE

(30) Priorité: 29.05.2008 FR 0802927
(43) Date de publication de la demande: 23.02.2011
(73) Titulaire: Vironneau, Pierre, 31120 Portet sur Garonne (FR); Seosse, Bernard, 40300 Saint Lon Les Mines (FR); Aphecetche, Pierre, 40990 Saint Vincent de Paul (FR); Caramanos, Frédéric, 64210 Bidart (FR); Cazères, Pascal, 64300 Biarritz (FR); Avril, Alain, 75005 Paris (FR); GROUPE CAHORS, 46000 CAHORS (FR)
(72) Inventeur: APHECETCHE, Pierre, 40990 Saint Vicent de Paul (FR); AVRIL, Alain, 75005 Paris (DE); CARAMANOS, Frédéric, 64210 Bidart (FR); CAZERES, Pascal, 64300 Biarritz (FR); SEOSSE, Bernhard, 40300 Saint-Lon-Les-Mines (FR); VIRONNEAU, Pierre, 31120 Portet Sur Garonne (FR)
(74) Mandataire: Hartmann, Jean-Luc
(86) Numéro de dépôt international: PCT/FR2009/050985
(87) Numéro de publication internationale: WO 2009/156641

(56) Documents cités:
- EP-A- 1 331 458
- EP-A- 1 510 764
- DE-A1-102004 014 004
- DE-U1- 8 337 249
- DE-U1- 29 803 878
- GB-A- 2 373 849

## Description

La présente invention se rapporte aux dispositifs échangeurs de chaleur double flux, entre au moins un premier et un deuxième fluides, comportant :
- une enveloppe externe étanche aux premier et deuxième fluides,
- au moins une paroi d'échange thermique entre les premier et deuxième fluides, logée à l'intérieur de ladite enveloppe externe,
- une première ouverture d'entrée, pour le premier fluide, formée à une première extrémité de l'enveloppe externe,
- une deuxième ouverture d'entrée, pour le deuxième fluide, formée à une deuxième extrémité de l'enveloppe externe, opposée à la première extrémité de cette dernière,
- ladite enveloppe externe adoptant une forme allongée s'étendant entre ses première et deuxième extrémités,
- ladite paroi d'échange s'étendant entre lesdites première et deuxième ouvertures d'entrées de fluides,
- une première ouverture de sortie, pour l'extraction du premier fluide hors de l'enveloppe externe,
- une deuxième ouverture de sortie, pour l'extraction du deuxième fluide hors de l'enveloppe externe,
- un premier conduit pour la circulation du premier fluide à l'intérieur de l'enveloppe externe entre la première ouverture d'entrée et la première ouverture de sortie de celui-ci, dont une partie de paroi est constituée d'une première face de ladite paroi d'échange,
- un deuxième conduit pour la circulation du deuxième fluide à l'intérieur de l'enveloppe externe entre la deuxième ouverture d'entrée et la deuxième ouverture de sortie de celui-ci, dont une partie de paroi est constituée d'une deuxième face de ladite paroi d'échange opposée à la première face,
- lesdits premier et deuxième fluides étant destinés à circuler à contre-courant de part et d'autre de la paroi d'échange.

L'art antérieur enseigne un tel type d'échangeur. Un inconvénient de ce type d'échangeur est que les entrées et sorties des premier et deuxième fluides sont respectivement regroupées deux à deux, d'où une perte de rendement de l'échangeur. En effet, en raison d'une circulation à contre-courant des fluides sur les deux faces opposées de la paroi d'échange, l'entrée d'un fluide et la sortie de l'autre se trouvent très proches l'une de l'autre, pouvant induire des mélanges entre les fluides.

On connaît par exemple le document GB-A-2 373 849 qui se rapporte à un échangeur de chaleur comme décrit ci-dessus.

Un objectif principal de la présente invention est d'améliorer les performances de ce type d'échangeur.

Plus précisément, la présente invention appliquée à un dispositif échangeur de chaleur tel que défini en préambule du présent mémoire, se caractérise en ce que :
- ladite première ouverture de sortie pour le premier fluide, est formée dans la zone de ladite première extrémité de l'enveloppe externe,
- ladite deuxième ouverture de sortie pour le deuxième fluide, est formée dans la zone de ladite deuxième extrémité de l'enveloppe externe,
- en sorte que ladite deuxième ouverture de sortie pour le deuxième fluide, et ladite première ouverture d'entrée pour le premier fluide, soient séparées d'une distance égale ou supérieure à la longueur de la paroi d'échange, et
- en sorte que ladite première ouverture de sortie pour le premier fluide, et ladite deuxième ouverture d'entrée, pour le deuxième fluide, soient séparées d'une distance égale ou supérieure à la longueur de la paroi d'échange.

La présente invention permet en rapprochant les entrées et sorties d'un même fluide, de la même extrémité de l'enveloppe, tout en faisant la même chose pour l'autre fluide à l'autre extrémité de l'enveloppe, de créer une distance suffisante entre les ouvertures des deux fluides, égale ou supérieure à la longueur de la paroi d'échange, permettant de minimiser les mélanges de fluides, et augmentant ainsi les performances de l'échangeur.

Selon une caractéristique avantageuse,
- lesdites première ouverture d'entrée pour le premier fluide, et deuxième ouverture de sortie pour le deuxième fluide, sont situées d'un même premier côté de ladite enveloppe externe,
- lesdites deuxième ouverture d'entrée pour le deuxième fluide, et première ouverture de sortie pour le premier fluide, étant situées d'un même deuxième côté de ladite enveloppe externe, opposé au premier côté.

Cette caractéristique permet d'agencer les ouvertures sur l'enveloppe externe en sorte de pouvoir intégrer le dispositif dans une couche de matériau comportant deux faces opposées, l'ouverture d'entrée du premier fluide et l'ouverture de sortie du deuxième fluide débouchant sur une première face du matériau, l'ouverture d'entrée du deuxième fluide et l'ouverture de sortie du premier fluide débouchant sur la deuxième face du matériau opposée à la première face.

Selon une caractéristique avantageuse :
- ledit premier conduit pour le premier fluide comporte un premier tronçon s'étendant le long de la paroi d'échange sans entrer en contact avec cette dernière, et
- ledit deuxième conduit pour le deuxième fluide comporte un deuxième tronçon s'étendant le long de la paroi d'échange, sans entrer en contact avec cette dernière.

Cette caractéristique permet d'offrir une partie du conduit pour chaque fluide, qui permet de modifier la température du fluide en fonction de la température du matériau dans lequel le dispositif est intégré, plus particulièrement de la température du milieu en contact avec ladite partie de conduit via l'enveloppe externe, par conduction à travers les parois de ladite partie de conduit, ceci avant ou après son passage sur la paroi d'échange.

Selon une caractéristique avantageuse :
- ledit premier tronçon s'étend de la paroi d'échange jusqu'à la première ouverture de sortie, longeant la paroi d'échange et parallèle à celle-ci, et
- ledit deuxième tronçon s'étend de la paroi d'échange jusqu'à la deuxième ouverture de sortie, longeant la paroi d'échange et parallèle à celle-ci.

Cette caractéristique permet d'obtenir un meilleur rendement de l'échangeur, en ce que le premier tronçon qui véhicule le fluide entrant se trouve à une température proche de celle du fluide sortant, après être passé sur la paroi d'échange, et donc n'échange pas ou peu thermiquement avec le premier tronçon, et le deuxième tronçon qui véhicule le fluide sortant se trouve lui aussi à une température proche de celle du fluide entrant, après être passé sur la paroi d'échange, et donc dans ce cas également, il n'y a pas ou peu d'échange thermique avec le deuxième tronçon.

Selon une caractéristique avantageuse, le dispositif selon l'invention comprend en outre :
- une première paroi isolante disposée entre la paroi d'échange et ledit premier tronçon du premier conduit, et
- une deuxième paroi isolante disposée entre la paroi d'échange et ledit deuxième tronçon du deuxième conduit,
- lesdites première et deuxième parois isolantes étant disposées de part et d'autre de la paroi d'échange et au moins sur la longueur de celle-ci.

Cette caractéristique permet d'assurer un meilleur rendement de la paroi d'échange, en isolant cette dernière afin que le transfert de chaleur entre les fluides qui passent sur la paroi, subisse le moins de perdition possible.

Selon une caractéristique avantageuse,
- ladite première ouverture d'entrée pour le premier fluide et ladite première ouverture de sortie pour le premier fluide sont disposées sur l'enveloppe externe sensiblement de manière opposée, afin que l'entrée et la sortie du premier fluide soient sensiblement effectuées suivant une première direction perpendiculaire ou sensiblement perpendiculaire à un axe longitudinal d'extension de l'enveloppe externe de forme allongée, et
- ladite deuxième ouverture d'entrée pour le deuxième fluide et ladite deuxième ouverture de sortie pour le deuxième fluide sont disposées sur l'enveloppe externe sensiblement de manière opposée, afin que l'entrée et la sortie du deuxième fluide soient sensiblement effectuées suivant une deuxième direction perpendiculaire ou sensiblement perpendiculaire à un axe longitudinal d'extension de l'enveloppe externe de forme allongée.

Selon une caractéristique avantageuse, lesdites première et deuxième directions sont parallèles ou sensiblement parallèles.

Selon une caractéristique avantageuse, le dispositif échangeur selon l'invention comprend en outre des moyens de vanne aptes à obturer ledit deuxième conduit à la sortie de la première face de ladite paroi d'échange, afin de détourner le deuxième fluide, ou fluide sortant, dans ledit premier conduit, pour faire passer ledit fluide sortant sur la deuxième face de ladite paroi d'échange.

Cette caractéristique confère au dispositif selon l'invention une capacité de dégivrage, à partir d'une circulation de l'air sortant d'une pièce, à température supérieure à l'air entrant, sur les deux faces de la paroi d'échange en vue de son dégivrage.

Selon une caractéristique avantageuse alternative de la précédente, le dispositif selon l'invention comprend en outre des moyens de résistance électrique disposés dans ledit premier conduit à proximité de la première ouverture d'entrée, afin de réchauffer le premier fluide ou fluide entrant avant son passage sur la paroi d'échange.

Cette caractéristique permet d'éviter l'utilisation d'une électrovanne pour la fonction de dégivrage, tout en conservant cette fonction. Elle permet également d'éviter l'utilisation d'une structure à cassette pour l'accès aux filtres et aux moto ventilateurs, et le cas échéant l'accès à l'électrovanne.

Selon une caractéristique avantageuse alternative de la précédente, le dispositif selon l'invention comprend des moyens de résistance électrique disposés dans ledit deuxième conduit à proximité de la deuxième ouverture d'entrée pour le deuxième fluide, afin de fournir un apport thermique au deuxième fluide ou fluide sortant avant son passage sur la paroi d'échange.

Cette caractéristique permet de réaliser un apport de calories à l'air sortant dans le cadre de la fonction de dégivrage, qui sera en partie transféré à l'air entrant via la paroi d'échange. Cet apport thermique sur l'air sortant présente l'avantage d'un rendement élevé, car il est fait à un endroit du dispositif qui est à température ambiante d'habitation.

Selon une caractéristique avantageuse, le dispositif selon l'invention comprend en outre :
- des premiers moyens de filtre pour le premier fluide, disposés dans l'enveloppe externe en travers dudit premier conduit de circulation du premier fluide dans l'enveloppe externe, entre l'ouverture d'entrée du premier fluide dans l'enveloppe externe et l'entrée du premier fluide sur la paroi d'échange, et
- des deuxièmes moyens de filtre pour le deuxième fluide, disposés dans l'enveloppe externe en travers dudit deuxième conduit de circulation du deuxième fluide dans l'enveloppe externe, entre l'ouverture d'entrée du deuxième fluide dans l'enveloppe externe et l'entrée du deuxième fluide sur la paroi d'échange.

Cette caractéristique permet d'éviter ou de réduire l'encrassement de la paroi d'échange, à la fois à partir du fluide entrant comme à partir du fluide sortant, et permet en outre d'assainir par filtration le fluide entrant lorsque le dispositif est placé comme moyen de ventilation d'une pièce d'habitation.

Selon une caractéristique avantageuse, le dispositif selon l'invention comprend en outre au moins l'un des premiers et deuxièmes moyens de moto ventilateurs suivants:
- des premiers moyens de moto ventilateur disposés dans ledit premier conduit, afin de générer une circulation du premier fluide dans ce dernier, et
- des deuxièmes moyens de moto ventilateur disposés dans ledit deuxième conduit, afin de générer une circulation du deuxième fluide dans ce dernier.

Cette caractéristique permet d'augmenter le débit de fluide traversant le dispositif, en forçant ce débit par convection forcée au moyen d'au moins un moto ventilateur. Il est à noter qu'un seul moto ventilateur, sur un des conduits peut suffire, dans ce cas l'autre fluide étant mis en mouvement par équilibre des pressions entre le milieu extérieur dans lequel le fluide sortant est rejeté et le milieu intérieur dans lequel le fluide entrant est introduit.

Selon une caractéristique avantageuse, le dispositif selon l'invention comprend en outre des moyens générateurs d'électricité, disposés au moins en partie devant ladite première ouverture d'entrée, et/ou devant ladite deuxième ouverture de sortie, en vue d'alimenter de manière autonome en électricité, lesdits premiers et deuxièmes moyens de moto ventilateur.

Cette caractéristique permet d'offrir une autonomie énergétique du dispositif selon l'invention, qui lui permet d'être installé dans un lieu non alimenté par l'énergie électrique traditionnelle, ou encore d'être installé dans lieu alimenté en électricité mais de manière indépendante à cette alimentation ; ainsi, il sera plus facile d'intégrer le dispositif selon l'invention par exemple dans des constructions existantes sans modifier la distribution électrique en place. La disposition définie des moyens générateurs d'électricité permet à la fois une bonne accessibilité de ces moyens, tout en offrant une exposition externe de ceux-ci, par exemple au soleil. En outre, ces moyens permettent une protection des ouvertures contre les intempéries afin d'éviter une pénétration dans les conduits du dispositif, de matières transportées par le vent, ou d'atténuer, voire éviter, les modifications du comportement aéraulique du dispositif en cas de rafale de vent ou de tempête.

Selon une caractéristique avantageuse, lesdits moyens générateurs d'électricité comprennent des cellules photovoltaïques.

Cette caractéristique permet d'utiliser le soleil comme source d'énergie pour alimenter le ou les moto ventilateurs.

Selon une caractéristique avantageuse, le dispositif selon l'invention comprend des moyens pour évacuer les condensats par ladite première ouverture d'entrée du premier fluide.

Ces moyens seront plus particulièrement décrits plus loin avec un exemple de mode de réalisation du dispositif selon l'invention, mais peuvent notamment être mise en oeuvre par une disposition inclinée de l'axe longitudinal de l'enveloppe externe du dispositif en sorte que les condensats soient de préférence évacués par l'ouverture d'entrée du premier fluide suivant un écoulement par gravité à travers le dispositif, le premier fluide étant le fluide entrant d'une construction dans le cas d'une utilisation du dispositif selon l'invention en tant que dispositif de ventilation ou analogue de ladite construction.

L'invention se rapporte en outre à une application d'un dispositif échangeur de chaleur selon l'invention, caractérisée en ce que ledit échangeur est associé à une pièce d'une habitation, de bureaux ou analogue, en sorte de permettre une ventilation individualisée de ladite pièce :
- ledit premier fluide étant le fluide entrant dans ladite pièce,
- ledit deuxième fluide étant le fluide sortant de ladite pièce,
- lesdites première ouverture d'entrée et deuxième ouverture de sortie, respectivement des premier et deuxième fluides, s'ouvrant sur l'extérieur de l'habitation, bureaux ou analogue, et
- lesdites deuxième ouverture d'entrée et première ouverture de sortie, respectivement des deuxième et premier fluides, s'ouvrant sur l'intérieur de ladite pièce.

Le dispositif selon l'invention permet grâce à sa structure aéraulique autonome, une ventilation individualisée d'une pièce, pouvant ainsi adapter facilement la ventilation en fonction des besoins indépendants de chaque pièce, contrairement à une ventilation centralisée qui ne permet pas de différencier les conditions de ventilation indépendamment pour chaque pièce. En outre, les dispositifs de ventilation individualisée selon l'invention permettent une économie d'installation de tuyauteries nécessaires aux systèmes de ventilation centralisée, et permettent donc d'éliminer les risques de développement bactérien dans ces tuyauteries, ainsi que de réduire un risque de développement bactérien du fait d'une minimisation de la longueur des tuyauteries conférée au dispositif de ventilation individualisée. En outre, le dispositif de ventilation individualisée selon l'invention permet d'éviter les risques de fuites d'eau en toiture par les prises et refoulement d'aire en toiture. En outre un équipement de dispositif de ventilation individualisée selon l'invention, pour une construction, revient moins cher qu'une ventilation centralisée. La régulation individuelle de la température de chaque pièce d'une construction au moyen de dispositifs de ventilation individualisée selon l'invention permet des économies d'énergie par rapport à une ventilation centralisée qui uniformise la température dans l'habitation et ne permet donc pas une température différenciée dans chaque pièce.

Selon une caractéristique avantageuse, ledit dispositif échangeur de chaleur est intégré dans l'épaisseur d'une paroi ou d'un mur formant ladite pièce, ou fixé à la surface intérieure de ladite paroi.

Cette caractéristique permet de rendre très discret le dispositif de ventilation en sorte qu'il n'apparaisse comme élément visibles extérieurement que les ouvertures d'entrée/sortie du dispositif. L'intégration dans l'épaisseur d'un mur ou analogue est rendue possible par la structure allongée de l'enveloppe externe, et notamment la structure combinée du dispositif à partir d'une paroi d'échange agencée entre les ouvertures.

Selon une caractéristique avantageuse, lorsque :
- ledit premier tronçon s'étend de la paroi d'échange jusqu'à la première ouverture de sortie, longeant la paroi d'échange et parallèle à celle-ci, et
- ledit deuxième tronçon s'étend de la paroi d'échange jusqu'à la deuxième ouverture de sortie, longeant la paroi d'échange et parallèle à celle-ci, alors
ledit dispositif échangeur est intégré dans un mur, et
- ledit premier fluide ou fluide entrant circule, par rapport à son sens de circulation le long de la paroi d'échange, à contre-courant dans ledit premier tronçon s'étendant de la sortie de la paroi d'échange jusqu'à la première ouverture de sortie, et
- ledit deuxième fluide ou fluide sortant circule, par rapport à son sens de circulation le long de la paroi d'échange, à contre-courant dans ledit deuxième tronçon s'étendant de la sortie de la paroi d'échange jusqu'à la deuxième ouverture.

Selon une caractéristique avantageuse, dépendante de la précédente, ledit premier tronçon est disposé entre la paroi d'échange et la surface du mur en contact avec le milieu intérieur.

Selon une caractéristique avantageuse, le dispositif échangeur de chaleur selon l'invention est intégré dans, ou associé à, l'un des éléments suivants :
- linteau d'une ouverture de ladite pièce, de type fenêtre, porte ou porte fenêtre, ou analogue,
- coffre de volet roulant,
- encadrement d'une ouverture, ouvrant ou dormant.

La configuration allongée de l'enveloppe externe du dispositif selon l'invention permet d'offrir des dispositions originales et fonctionnelles de ce dernier lors de son intégration dans un habitat ou analogue.

Selon une caractéristique avantageuse, un axe longitudinal du dispositif échangeur de chaleur selon l'invention est disposé horizontalement ou sensiblement horizontalement.

Par sensiblement horizontal, on entend ici la possibilité d'une inclinaison légère du dispositif par rapport à l'horizontale, dont la fonction serait l'évacuation des condensats hors du dispositif par gravité.

Selon une caractéristique avantageuse, un axe longitudinal du dispositif échangeur de chaleur selon l'invention est disposé verticalement ou sensiblement verticalement.

Cette caractéristique permet de disposer le dispositif échangeur de chaleur selon l'invention le long d'un montant de porte fenêtre, porte-fenêtre, ou analogue.

D'autres caractéristiques apparaîtront à la lecture qui suit d'exemples de modes de réalisation d'un dispositif échangeur de chaleur selon l'invention, et d'applications de celui-ci, accompagnée des dessins annexés, exemples donnés à titre illustratif non limitatif.
La figure 1 représente une vue en coupe longitudinale horizontale schématique d'un premier exemple de mode de réalisation d'un dispositif échangeur de chaleur selon l'invention, intégré dans un mur de construction, suivant la ligne I-I de la figure 2.
La figure 2 représente une vue en coupe transversale schématique du premier exemple de la figure 1, et selon la ligne II-II de la figure 1.
La figure 3 représente une vue en coupe longitudinale schématique d'un deuxième exemple de mode de réalisation d'un dispositif échangeur de chaleur selon l'invention, intégré dans un mur de construction, dans une première position de fonctionnement.
La figure 4 représente une vue en coupe longitudinale de l'exemple de la figure 3, dans une deuxième position de fonctionnement.
La figure 5 représente une vue en coupe longitudinale horizontale schématique suivant la ligne V-V de la figure 7, d'un troisième exemple de mode de réalisation d'un dispositif échangeur de chaleur selon l'invention, intégré dans un mur de construction.
La figure 6 représente une vue en coupe longitudinale verticale suivant la ligne VI-VI de la figure 7, de l'exemple de la figure 5.
La figure 7 représente une vue en coupe transversale schématique du troisième exemple de la figure 5, selon la ligne VII-VII représentée sur la figure 5 ou 6.
La figure 8 représente une vue en coupe transversale schématique d'un exemple d'application d'un dispositif échangeur selon l'invention.

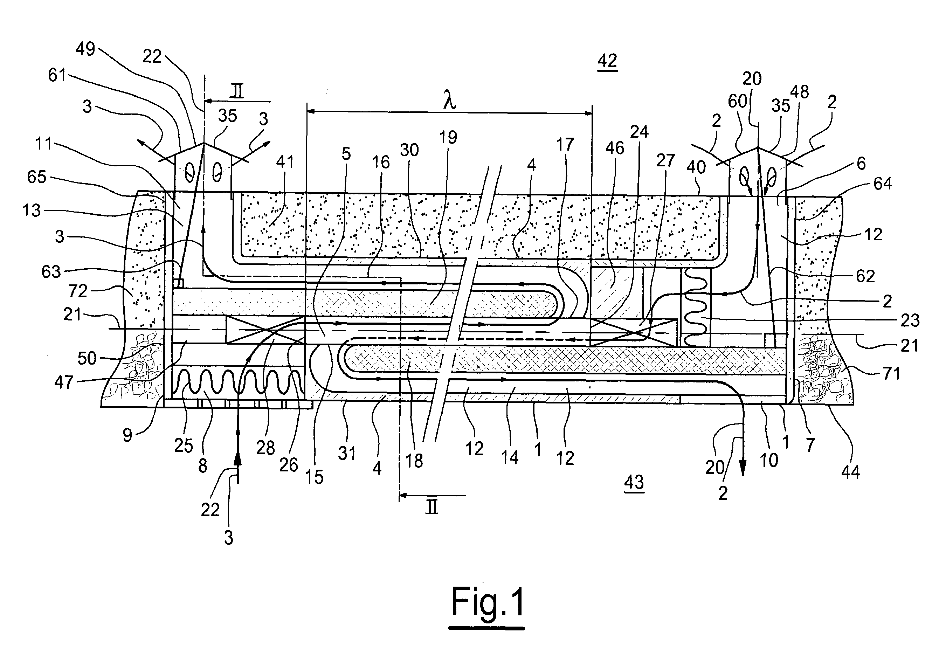

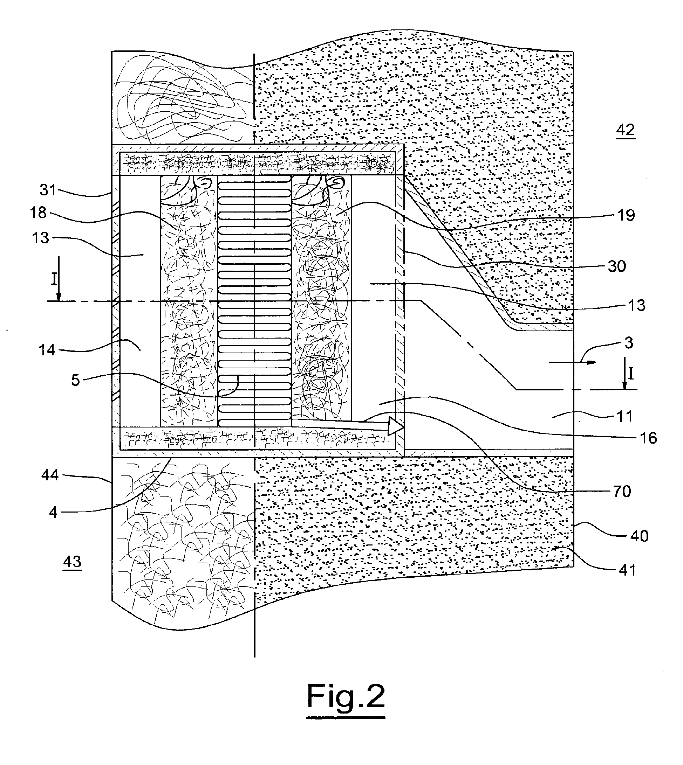

Le dispositif représenté sur les figures 1 et 2, est un dispositif 1 échangeur de chaleur entre un premier 2 et un deuxième 3 fluides, respectivement fluide entrant 2 et fluide sortant 3, dans l'exemple de l'air, avantageusement intégré dans l'épaisseur d'un mur 41 de construction, par exemple un mur 41 séparant le milieu extérieur 42 de la construction de l'intérieur 43 d'une pièce d'habitation, et comporte :
- une enveloppe externe 4 étanche aux premier 2 et deuxième 3 fluides,
- avantageusement une paroi 5 d'échange thermique entre les fluides entrant 2 et sortant 3, logée à l'intérieur de l'enveloppe externe 4,
- une première ouverture d'entrée 6, pour le fluide entrant 2, formée à une première extrémité 7 de l'enveloppe externe 4,
- une deuxième ouverture d'entrée 8, pour le fluide sortant 3, formée à une deuxième extrémité 9 de l'enveloppe externe 4, opposée à la première extrémité 7 de cette dernière,
- l'enveloppe externe 4 adoptant une forme allongée s'étendant entre ses première 7 et deuxième 9 extrémités,
- la paroi d'échange 5 s'étendant entre les première 6 et deuxième 8 ouvertures d'entrées des fluides 2, 3,
- une première ouverture de sortie 10, pour l'extraction du fluide entrant 2 hors de l'enveloppe externe 4,
- une deuxième ouverture de sortie 11, pour l'extraction du fluide sortant 3 hors de l'enveloppe externe 4,
- un premier conduit 12 pour la circulation du fluide entrant 2 à l'intérieur de l'enveloppe externe 4 entre l'ouverture d'entrée 6 et l'ouverture de sortie 10 de celui-ci, dont une partie de paroi est constituée d'une première face de la paroi d'échange 5,
- un deuxième conduit 13 pour la circulation du fluide sortant 3 à l'intérieur de l'enveloppe externe 4 entre l'ouverture d'entrée 8 et l'ouverture de sortie 11 de celui-ci, dont une partie de paroi est constituée d'une deuxième face de la paroi d'échange 5 opposée à la première face,
- les fluides entrant 2 et sortant 3 étant destinés à circuler à contre-courant de part et d'autre de la paroi d'échange 5,
- la première ouverture de sortie 10 pour le fluide entrant 2, étant formée dans la zone de la première extrémité 7 de l'enveloppe externe 4,
- la deuxième ouverture de sortie 11 pour le fluide sortant 3, étant formée dans la zone de la deuxième extrémité 9 de l'enveloppe externe 4,
- en sorte que la deuxième ouverture de sortie 11 pour le fluide sortant 3, et la première ouverture d'entrée 6 pour le fluide entrant 2, soient séparées d'une distance égale ou supérieure à la longueur 4 de la paroi d'échange, et
- en sorte que la première ouverture de sortie 10 pour le fluide entrant 2, et la deuxième ouverture d'entrée 8, pour le fluide sortant 3, soient séparées d'une distance égale ou supérieure à la longueur 4 de la paroi d'échange.

Par fluide entrant 2 on entend dans l'exemple l'air qui traverse le dispositif 1, en passant de l'extérieur 42 de la construction vers l'intérieur 43 de celle-ci, et par fluide sortant 3, l'air qui traverse le dispositif 1 en passant de l'intérieur 43 de la construction vers l'extérieur 42 de celle-ci, comme représenté sur la figure 1.

L'enveloppe externe 4 peut être réalisée en tout matériau de préférence rigide, par exemple sous la forme d'un boîtier 50 plastique ou métallique allongée, de préférence adoptant une forme prismatique droite, par exemple de section transversale creuse, de préférence polygonale, par exemple carrée ou rectangulaire, définissant avantageusement un boîtier 4 en forme de réglette, parallélépipédique, comportant par exemple quatre faces latérales à angle droit et deux faces d'extrémités, sur lequel sont formées les ouvertures 6, 11, 8, 10 comme définies plus haut et ci-dessous. Typiquement, la longueur du boîtier pourra par exemple être de l'ordre de 1 mètre à 3 mètres, de préférence de 1 m à 2 m.

L'enveloppe externe 4 pourra comporter deux tubes 64, 65, solidaires de l'enveloppe et destinés à traverser un mur dans lequel ou contre lequel le dispositif 1 est destiné à être fixé. Les deux tubes 64 et 65 sont par exemple perpendiculaires à la face 30 de l'enveloppe 4 dirigée vers l'extérieur 42, comme représenté sur la figure 1, et placés préférentiellement, respectivement dans deux angles de la face 30 comme montré sur les figures 1 et 2, plus généralement dans deux angles de l'enveloppe externe 4, lorsque les premier 12 et deuxième 13 conduits aboutissent ou démarrent respectivement à ces deux angles comme montré par exemple sur les figures 1 et 2, afin de permettre avantageusement un écoulement des condensats hors du dispositif 1 par gravité, que l'enveloppe externe 4 soit disposée horizontalement ou verticalement. Mais de préférence, les tubes 64, 65 formeront avec cette face 30 un angle supérieur à 90 ° suivant deux plans perpendiculaires entre eux et perpendiculaires à cette face 30 (non représenté), afin de permettre ou d'améliorer avantageusement l'écoulement des condensats hors du dispositif 1 de préférence à travers l'ouverture 6 en bout de tube 64, quelle que soit la position de montage du dispositif 1, verticale ou horizontale. Les extrémités libres des tubes 64, 65 forment respectivement les ouvertures 6 et 11 d'entrée et de sortie des fluides 2, 3. Comme représenté sur la figure 2, l'écoulement des condensats peut être assuré par toute pente 70 appropriée en vue d'évacuer les condensats vers l'extérieur de l'enveloppe 4 de préférence par l'ouverture 6 d'entrée du premier fluide 2 débouchant sur l'extérieur 42.

De manière avantageuse, comme représenté sur la figure 1,
- l'ouverture d'entrée 6 pour le fluide entrant 2, et l'ouverture de sortie 11 pour le fluide sortant 3, sont situées d'un même premier côté 30 de l'enveloppe externe 4, par exemple sur une même face du boîtier en forme de réglette, dirigée vers l'extérieur 42, et
- l'ouverture d'entrée 8 pour le fluide sortant 3, et l'ouverture de sortie 10 pour le fluide sortant 2, sont situées d'un même deuxième côté 31 de l'enveloppe externe 4, opposé au premier côté 30, dirigée vers l'intérieur 43 de la construction, par exemple la face latérale 31 du boîtier en forme de réglette, opposée à sa face latérale 30.

De manière avantageuse, comme représenté sur la figure 1,
- le premier conduit 12 pour le fluide entrant 2 comporte un premier tronçon 14 s'étendant le long de la paroi d'échange 5, en suivant l'axe longitudinal 21 du boîtier 4, sans entrer en contact avec cette dernière, et en étant séparé de la paroi d'échange 5 par une première paroi isolante 18 disposée donc entre cette paroi d'échange 5 et le premier tronçon 14 du premier conduit 12 ;
- le deuxième conduit 13 pour le fluide sortant 3 comporte un deuxième tronçon 16 s'étendant le long de la paroi d'échange 5, en suivant l'axe longitudinal 21 du boîtier 4, sans entrer en contact avec cette dernière, et en étant séparé de la paroi d'échange 5 par une deuxième paroi isolante 19 disposée donc entre cette paroi d'échange 5 et le deuxième tronçon 16 du deuxième conduit 13.

Les première 18 et deuxième 19 parois isolantes sont ainsi avantageusement disposées de part et d'autre de la paroi d'échange 5 et sur la longueur de celle-ci.

De manière avantageuse, comme représenté sur la figure 1,
- le premier tronçon 14 s'étend de la paroi d'échange 5 jusqu'à la première ouverture de sortie 10, longeant la paroi d'échange et parallèle à celle-ci, et plus particulièrement de la sortie 15 de la paroi d'échange 5 pour le premier fluide 2 jusqu'à la première ouverture de sortie 10,
- le deuxième tronçon 16 s'étend de la paroi d'échange 5 jusqu'à la deuxième ouverture de sortie 11, longeant la paroi d'échange et parallèle à celle-ci, et plus particulièrement de la sortie 17 de la paroi d'échange 5 pour le deuxième fluide 3 jusqu'à la deuxième ouverture de sortie 11.

Les parois isolantes 18, 19 peuvent être avantageusement obtenues à partir de toute matière isolante, légère, par exemple polystyrène expansé, polyuréthane, mousse isolante, ou analogue.

De manière avantageuse, comme représenté sur la figure 1,
- l'ouverture d'entrée 6 et l'ouverture de sortie 10 pour le fluide entrant 2 sont disposées sur le boîtier 4 sensiblement de manière opposée, afin que l'entrée du fluide entrant 2 dans le dispositif et sa sortie hors du dispositif 1 soient sensiblement effectuées suivant une première direction 20 perpendiculaire ou sensiblement perpendiculaire à un axe longitudinal 21 d'extension du boîtier 4 en forme allongée de réglette, et
- l'ouverture d'entrée 8 et l'ouverture de sortie 11 pour le fluide sortant 3 sont disposées sur le boîtier 4 sensiblement de manière opposée, afin que l'entrée du fluide sortant 3 dans le dispositif 1 et sa sortie hors du dispositif soient sensiblement effectuées suivant une deuxième direction 22 perpendiculaire ou sensiblement perpendiculaire à l'axe longitudinal 21 d'extension du boîtier 4 en forme allongée de réglette.

Les première 20 et deuxième 22 directions ainsi définies sont avantageusement parallèles ou sensiblement parallèles, permettant des entrées et des extractions des flux d'air 2, 3 sur les deux faces 40 et 44 opposées du mur 41, et perpendiculairement à celles-ci, comme représenté sur la figure 1.

La paroi d'échange 5 adopte avantageusement une forme plane, de préférence en accordéon, de préférence réalisée à partir d'une feuille unique, comme représenté sur la figure 2, s'étendant approximativement sur la longueur du boîtier 4 en forme de réglette, par exemple parallèlement ou sensiblement parallèle à l'axe 21 longitudinal du boîtier, et définissant de part et d'autre de celle-ci respectivement un conduit pour le fluide entrant 2 et un conduit pour le fluide 3 sortant entre les plis de l'accordéon. La paroi d'échange 5 peut avantageusement être fabriquée à partir d'une feuille conductrice, de préférence métallique, par exemple à base d'aluminium ou de cuivre, de faible épaisseur afin d'améliorer le rendement de l'échange de chaleur à travers cette paroi 5 entre les deux fluides 2, 3. Une dimension essentielle de cette paroi 5 est celle de sa longueur définissant sensiblement la longueur du boîtier 4, et une autre dimension essentielle est celle de sa largeur, développée une fois la feuille 5 mise à plat, dont le produit définit la surface d'échange du dispositif échangeur 1, qui doit être adaptée à la pièce que le dispositif 1 doit ventiler. La paroi d'échange 5, avantageusement en forme d'accordéon, est prise en sandwich entre les deux parois isolantes 18 et 19 comme représenté sur les figures 1 et 2, et entre de préférence en contact avec celles-ci par les zones des plis de l'accordéon.

Le dispositif 1 représenté comprend avantageusement en outre :
- des premiers moyens de filtre 23 pour le fluide entrant 2, disposés dans l'enveloppe externe ou boîtier 4 en travers du premier conduit 12 de circulation du fluide entrant 2 dans le boîtier 4, entre l'ouverture d'entrée 6 du fluide entrant et l'entrée 24 du fluide entrant 2 sur la paroi d'échange 5, et
- des deuxièmes moyens de filtre 25 pour le fluide sortant 3, disposés dans l'enveloppe externe 4 en travers du deuxième conduit 13 de circulation du fluide sortant 3 dans le boîtier 4, entre l'ouverture d'entrée 8 du fluide sortant 3 et l'entrée 26 dudit fluide sortant 3 sur la paroi d'échange 5.

Ces premier 23 et deuxième 25 moyens de filtre peuvent être avantageusement des cassettes filtrantes de types connues, qui seront de préférence accessibles à partir de la face intérieure 44 du mur 41, par exemple au moyen de deux trappes d'accès respectives (non représentée) formées à la surface de l'enveloppe externe ou boîtier 4 et vers les deux extrémités de bout de celui-ci, dans les zones d'entrée respectives des fluides entrant 2 et sortant 3. À cet effet, une face du boîtier 4, par exemple la face 31 comportant les ouvertures 8 et 10 pourra être alignée avec la surface intérieure 44 du mur 41, et comportera les trappes d'accès, afin de faciliter la maintenance des filtres, en encastrant le boîtier 4 dans le mur, soit dans la matière porteuse du mur, soit dans la couche d'isolation de celui-ci. Dans le cas où le boîtier 4 serait fixé contre un mur, ce qui a été dit au-dessus à l'égard des trappes d'accès reste valable ; dans ce cas, le mur doit comporter deux trous traversant pour mettre les ouvertures 6 et 11 en communication fluidique avec l'extérieur 42. Il y a lieu de noter que l'utilisation de filtres individuels pour chaque dispositif 1, dans une construction, permet de réaliser des économies d'entretien, comparé aux filtres d'une installation de ventilation centralisée beaucoup plus onéreux.

Le dispositif 1 représenté sur la figure 1 pourrait fonctionner sans apport d'énergie par convection naturelle, par exemple mais pas exclusivement, lorsqu'il est placé verticalement le long d'un montant de porte ; cependant, le dispositif 1 représenté comporte avantageusement en outre au moins l'un des premiers et deuxièmes moyens de moto ventilateurs suivants, et dans le cas d'espèce les deux :
- des premiers moyens de moto ventilateur 27 disposés dans le premier conduit 12, afin de générer une circulation du fluide entrant 2 dans ce dernier, et
- des deuxièmes moyens de moto ventilateur 28 disposés dans le deuxième conduit 13, afin de générer une circulation du fluide sortant 3 dans ce dernier.

Les moyens de moto ventilateur 27, 28 utilisés sont de type connu, et seront avantageusement accessibles au moyen de deux trappes d'accès, de préférence respectivement au moyen des deux trappes d'accès prévues pour les deux moyens de filtre, puisque les moto ventilateurs 27, 28 peuvent être disposés dans le boîtier 4 respectivement dans les mêmes zones que les moyens de filtre 23, 25, c'est à dire aux deux extrémités de bout du boîtier-réglette 4, comme représenté sur la figure 1. Les moto ventilateurs ou turbines 27, 28 pourront être enclipables dans le boîtier 4 afin de faciliter leur maintenance ou leur remplacement, en étant extractibles à travers les trappes d'accès. De préférence, les moto ventilateurs ou turbines 27, 28 fonctionneront en 12 Volts afin d'éviter les risques d'incendie ou d'électrocution.

De manière avantageuse, le dispositif 1 représenté comprend en outre des moyens générateurs d'électricité 35, disposés au moins en partie devant l'ouverture d'entrée 6 du fluide entrant 2, et/ou devant l'ouverture de sortie 11 du fluide sortant, en vue d'alimenter de manière autonome en électricité, les premiers 27 et deuxièmes 28 moyens de moto ventilateur. Ces moyens générateurs d'électricité peuvent comprendre des accumulateurs électriques rechargeables 46, 47 inclus dans le boîtier 4, par exemple dans des zones accessibles à partir des trappes d'accès aux moyens de filtres 23, 25 et aux moto ventilateurs 27, 28, c'est à dire aux extrémités de bout du boîtier 4, comme représenté sur la figure 1 et telles que définies plus haut.

Les moyens générateurs d'électricité 35 comprennent avantageusement des cellules photovoltaïques 48, 49, disposées de préférence devant l'ouverture d'entrée 6 du fluide entrant 2, et/ou devant l'ouverture de sortie 11 du fluide sortant, sur des déflecteurs 60, 61 placés devant ces ouvertures, comme représenté sur la figure 1, afin de permettre un rechargement des accumulateurs rechargeables 46, 47. Dans ce cas, les cellules photovoltaïques sont individualisées pour chaque dispositif 1 équipant une pièce de la construction. Il est possible de manière alternative d'alimenter l'ensemble des dispositifs 1 d'une construction avec des cellules photovoltaïques centralisées, par exemple disposées sur le toit de la construction. Tout dispositif de régulation (non représenté) nécessaire au fonctionnement des moto ventilateurs, des accumulateurs, pourra être intégré dans le boîtier 4, par exemple dans une zone proche des accumulateurs, et accessible via les trappes d'accès décrites plus haut.

Les déflecteurs 60, 61 pourront de préférence être démontables de l'extérieur, et serviront de clapet fixe anti-coup de vent, et avantageusement de filtres à insectes. Ils incluent les prises de raccordement électriques pour relier les cellules photovoltaïques portées par les déflecteurs au dispositif de régulation (non représenté). Une tige de blocage 62, 63 pour chaque déflecteur 60, 61 respectivement empêche les cellules photovoltaïques de pouvoir se décrocher de l'ouverture d'entrée 6 ou de sortie 11 de fluide. Les déflecteurs 60, 61 pourront de préférence adopter toute forme appropriée et être orientée de manière adéquate pour un rendement optimisé des cellules photovoltaïques qu'ils portent en fonction de l'orientation de la construction. De manière avantageuse, les déflecteurs 60, 61 pourront adopter une forme plane rotative autour des axes des conduits formant les ouvertures 6 et 11 en face extérieure.

L'alimentation électrique des moto ventilateurs 27, 28 peut de manière alternative être faite par le réseau d'alimentation électrique de la construction, soit de manière centralisée, soit de manière individualisée via des transformateurs à faible tension, par exemple 12 volts.

De manière avantageuse, le dispositif 1 comprend des moyens pour évacuer les condensats par la première ouverture d'entrée 6 du premier fluide 2. Ces moyens peuvent adopter, en position horizontale ou sensiblement du boîtier 4, la forme d'une légère inclinaison du boîtier 4 ou du ou des conduits internes 12, 13 appropriés des fluides 2, 3, afin d'assurer un écoulement par gravité des condensats hors du boîtier 4, de préférence via l'ouverture 6 débouchant sur la surface extérieure 40 du mur 41 de la construction. Dans le cas d'un montage en position verticale du boîtier 4, les condensats s'écouleront naturellement, de préférence par l'ouverture inférieure 6.

Le fonctionnement du dispositif 1 échangeur de chaleur représenté sur les figures 1 et 2 est le suivant :
- sous l'effet de la convection naturelle, ou d'un ou deux moto ventilateurs, le fluide entrant 2 qui provient du milieu extérieur 42 pénètre dans le dispositif 1 par l'ouverture 6 à une extrémité 7 du boîtier 4, puis parcourt le conduit 12 interne, d'abord en traversant le filtre 23 puis en entrant 24 sur la paroi d'échange 5 en contact avec elle et en longeant celle-ci sur sensiblement la longueur du boîtier 4, parcours au cours duquel le fluide externe 2 effectue l'échange thermique principal avec le fluide 3 sortant qui provient quant à lui de l'intérieur 43 de la construction, puis le fluide entrant 2 sort de la paroi d'échange 5 pour suivre en sens inverse ou à contre courant selon la direction d'écoulement le long de la paroi d'échange, le tronçon 14 longeant cette paroi d'échange 5 mais sans entrer en contact avec elle, sur sensiblement la longueur du boîtier 4, puis entre à l'intérieur 43 de la construction par l'ouverture 10 du boîtier 4 : lorsque le fluide extérieur entrant 2 est plus froid que le fluide intérieur sortant 3, usage principal et le plus courant de l'échangeur, le fluide entrant 2 se réchauffe lors de son passage sur la paroi d'échange 5, afin de récupérer une partie de la chaleur du fluide sortant 3 de la construction, et les calories apportées au fluide entrant 2 sont au moins conservées dans le tronçon 14 placé proche de l'intérieur 43 et donc à température voisine de la température intérieure ; et
- sous l'effet de la convection naturelle, ou d'un ou deux moto ventilateurs, le fluide intérieur sortant 3 pénètre dans le dispositif 1 par l'ouverture 8 du boîtier 4 à l'extrémité 9 opposée du boîtier 4, traverse le filtre 25 puis entre 26 sur la paroi d'échange 5 et longe celle-ci en contact avec elle sur sensiblement la longueur du boîtier 4, parcours au cours duquel le fluide intérieur sortant 3 effectue un échange thermique avec le fluide entrant 2 qui provient de l'extérieur 42 de la construction, puis s'écoule dans le tronçon 16 en sens inverse ou à contre courant selon la direction d'écoulement le long de la paroi d'échange, avant de sortir de la construction par l'ouverture 11 du boîtier située à l'extrémité 7 ;
- les fluides entrant 2 et sortant 3 entrent ainsi sur la paroi d'échange 5 aux deux extrémités longitudinales 24, 26 de celle-ci sensiblement voisines des deux extrémités 9 et 7 de bout du boîtier 4, respectivement, et parcourent la paroi 5 respectivement de chaque côté de celle-ci à contre courant afin d'optimiser l'échange thermique.

Chaque fluide 2, 3 parcourt donc sensiblement deux fois la longueur du boîtier 4 entre son entrée 8, 6 dans celui-ci et sa sortie 10, 11 de celui-ci. Les deux fluides parcourent sensiblement les mêmes formes de trajet dans le boîtier 4, mais en sens inverse ou contre courant, et ont en commun les trajet contre la paroi d'échange 5 séparés de celle-ci.

Le dispositif 1 comportera toute isolation nécessaire aux meilleures performances de l'échangeur thermique, et notamment les parties de conduit du fluide entrant 2 après son passage sur la paroi d'échange 5 seront isolées des parties de ce même conduit avant le passage sur la paroi d'échange. De même, les parties ou cloisons du dispositif 1, séparatrices entre le milieu extérieur 42 et l'intérieur 43 de la construction, ou entre les deux conduits des fluides entrant 2 et sortant 3, seront isolées de manière appropriée pour qu'il n'existe pas ou peu de déperdition thermique à travers ces parties ou cloisons.

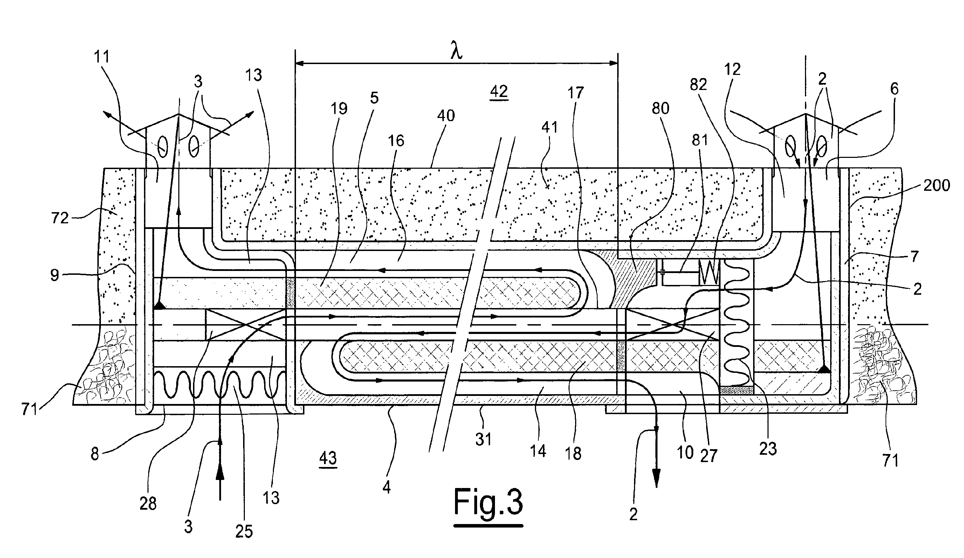

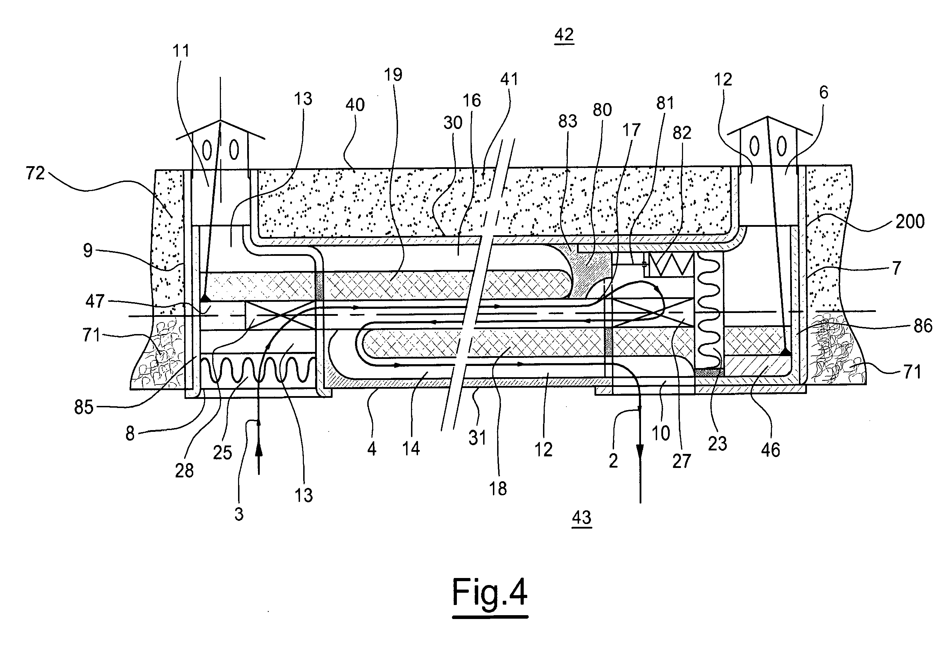

Les figures 3 et 4 représentent un dispositif 200 alternatif au dispositif 1 de la figure 1, qui est similaire à ce dernier, à la différence que le dispositif 200 comprend en outre des moyens de vanne 80 aptes à obturer le deuxième conduit 13 à la sortie 17 de la première face de la paroi d'échange 5, afin de détourner le deuxième fluide 3, ou fluide sortant, dans le premier conduit 12, pour faire passer ce fluide sortant 3 sur la deuxième face de la paroi d'échange 5. Les éléments fonctionnellement identiques à ceux de l'exemple de la figure 1 sont repris sur la figure 3 avec les mêmes références.

La figure 3 représente les moyens de vanne 80 en position de repos, soit le deuxième conduit 13 étant non obturé à la sortie 17 de la paroi d'échange 5, position qui configure l'échangeur 200 selon une configuration analogue à celle de la figure 1, suivant laquelle les premier 2 et deuxième 3 fluides circulent chacun respectivement d'un côté et de l'autre de la paroi d'échange 5.

La figure 4 représente les moyens de vanne 80 en position active, soit le deuxième conduit 13 étant obturé à la sortie de la paroi d'échange 5. Cette position correspond à la position de dégivrage de l'échangeur 200, selon laquelle le fluide sortant 3, à température plus élevée que le fluide entrant 2, circule sur les deux faces opposées de la paroi d'échange 5 durant un temps déterminé nécessaire au dégivrage de cette paroi. Il est à noter qu'une faible partie du flux de fluide sortant 3 peut s'échapper par l'ouverture 6, ce dernier étant normalement en surpression par rapport à la pression atmosphérique, facilitant ainsi l'évacuation ou écoulement des condensats en réchauffant une partie du conduit d'évacuation de ces derniers jusqu'à l'ouverture 6 ; en effet, le filtre 23 constitue une perte de charge pouvant suffisamment limiter cette perte de flux.

Les moyens de vanne 80 pourront adopter toute forme appropriée à la fonction expliquée ci-dessus, de préférence une électrovanne 81 à commande automatique avantageusement couplée au système de régulation, qui peut fonctionner, soit par différence pressostatique, soit par sonde extérieure proportionnelle qui, en fonction de la température extérieure, crée des cycles de dégivrage. Sur la figure 3, l'électrovanne 81 en position de repos est représentée en position active avec un ressort de rappel 82 comprimé, et sur la figure 4, l'électrovanne 81 en position de repos est représentée avec le ressort de rappel 82 détendu exerçant une pression sur le clapet 83 de vanne pour la fermeture du conduit 13.

Un cycle de dégivrage fonctionne de la manière suivante :
- l'électrovanne 81 est actionnée afin d'obturer le deuxième conduit 13 en sortie de paroi d'échange 5, par exemple en venant en butée sur l'isolant 19 comme représenté sur la figure 4,
- le moto ventilateur 28 du premier conduit 13 est actionné, tandis que le moto ventilateur 27 du deuxième 12 conduit d'air entrant est au repos, c'est-à-dire non actionné ;

Ainsi, le fluide sortant 3 est en surpression à la sortie 17 de la paroi d'échange 5 par rapport à la pression du deuxième conduit 12, et en surpression par rapport à la pression atmosphérique extérieure, ce qui entraîne un refoulement de l'air sortant 3 dans le premier conduit 12 vers l'ouverture de sortie 10. Le fluide intérieur à la pièce, se trouvant à température supérieure à la température de givrage, circule ainsi en circuit fermé de chaque côté de la paroi d'échange 5 entraînant son dégivrage.

Sur les figures 1 et 2 on a représenté le dispositif 1 de manière schématique sans représenter de structure à cassette amovible au moyens desquelles les filtres et les ventilateurs d'extrémités notamment, ainsi que le dispositif de régulation, sont aptes à être retirés en face avant par une trappe ou analogue. Cependant de telles structures à cassette, une à chaque extrémité du dispositif échangeur réglette, sont particulièrement recommandées pour faciliter l'accès à ces organes dans l'exemple de la figure 1.

Sur les figures 3 et 4 on a représenté le dispositif 200 de manière schématique avec de telles structures à cassette, respectivement référencées 85 et 86 pour la première extrémité 7 et la deuxième extrémité 9 de l'enveloppe 4 du dispositif 200, qui comprennent les filtres, les moto ventilateurs, les dispositifs de régulation, et les moyens de vanne le cas échéant. Chaque cassette est apte à être retirée an face avant, de l'intérieur 43, en vue de la maintenance ou du remplacement d'un organe.

Pour les références des figures 3 et 4 non expressément utilisées dans la description à l'égard de ces figures, on pourra se rapporter aux références correspondantes de la description des figures 1 et 2.

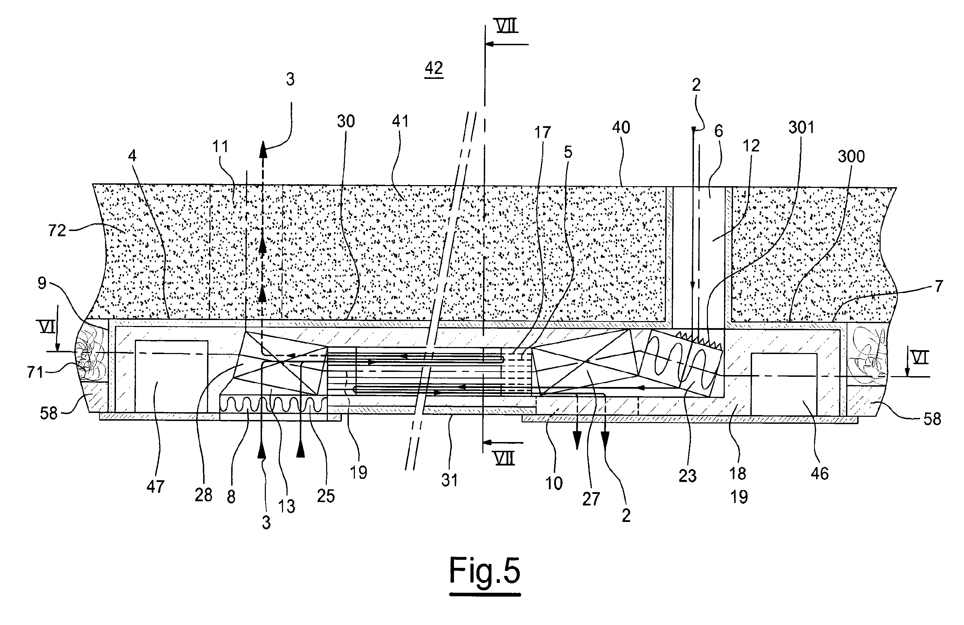

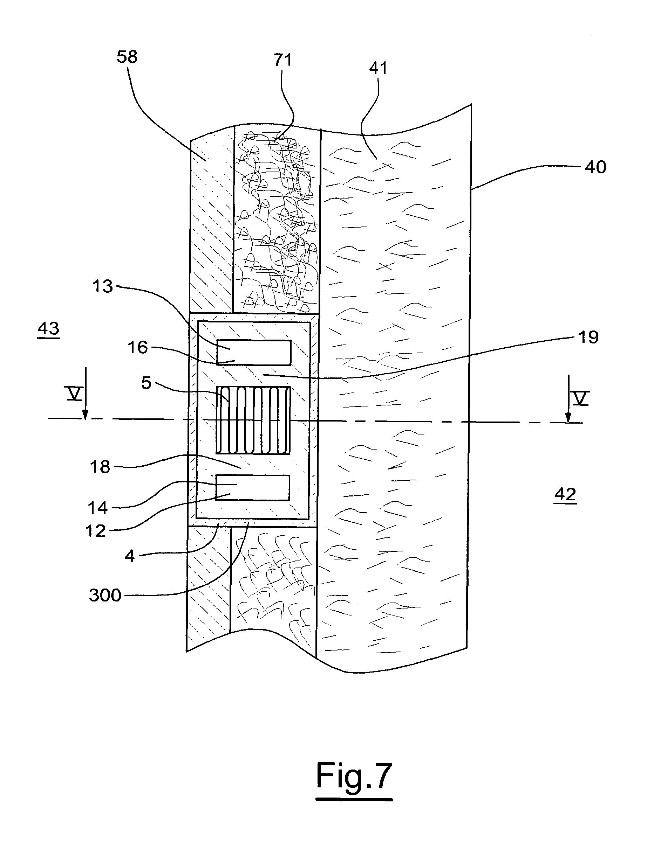

Les figures 5 à 7 représentent un dispositif 300 alternatif au dispositif 200 des figures 3 et 4, aux différences près essentielles suivantes :
- Absence d'électrovanne sur le deuxième conduit,
- Présence de moyens de résistance électrique 301 disposés dans le premier conduit 12 à proximité de la première ouverture d'entrée 6, afin de réchauffer le premier fluide 2 ou fluide entrant, en vue de la fonction dégivrage,
- Modification de l'agencement de la paroi d'échange 5 et des premier 12 et deuxième 13 conduits comme suit : la paroi d'échange 5 se présente avantageusement sous la forme d'une feuille unique pliée en forme d'accordéon, comme représenté sur la figure 7 et comme dans les exemples des figures 1 et 3, mais les plis de la paroi d'échange 5 s'étendent dans un plan perpendiculaire à la surface du mur dans lequel le dispositif 300 est intégré, contrairement au deuxième exemple décrit plus haut avec l'aide des figures 3 et 4, dans lequel les plis de la paroi d'échange 5 s'étendent dans un plan parallèle à la surface extérieure du mur dans lequel le dispositif est intégré.

Il est à noter que les éléments fonctionnellement identiques à ceux de l'exemple de la figure 1 ou de l'exemple de la figure 3 sont repris sur la figure 5 avec les mêmes références.

Une conséquence avantageuse d'une telle disposition de la paroi d'échange, par rapport aux surfaces extérieures du mur, est de permettre de placer tous les organes du dispositif, à savoir les filtres, les moto ventilateurs, les dispositifs de régulation, les accumulateurs le cas échéant... directement accessibles au moyen d'une trappe amovible en face avant à chaque extrémité du dispositif, en évitant une structure à cassettes comme représenté sur les figures 3 et 4.

La présence d'une résistance de dégivrage de l'air entrant, en remplacement de l'électrovanne de l'exemple des figures 3 et 4, permet également d'éviter l'utilisation d'une cassette côté électrovanne, dont la présence est nécessitée en vue d'un accès à cette électrovanne, notamment pour la maintenance. La résistance chauffante 301 en vue du dégivrage est gérée en termes de cycles d'actionnement comme expliqué avec l'électrovanne plus haut. La résistance électrique 301 peut être de petite taille et faible consommatrice d'énergie en ce que le ventilateur 27 d'air entrant est non actif en cycle de dégivrage, seul le ventilateur 28 d'air sortant étant activé : le débit d'air entrant réchauffé est donc minime et seulement induit par la dépression causée dans la pièce.

De manière alternative et préférentielle à la résistance 301, il est avantageux de placer une résistance chauffante (non représentée), avec la même fonction de dégivrage de l'air entrant, dans le deuxième conduit 13 à proximité de la deuxième ouverture d'entrée 8 pour le deuxième fluide 3, afin de réchauffer le deuxième fluide 2 ou fluide sortant avant son passage sur la paroi d'échange 5.

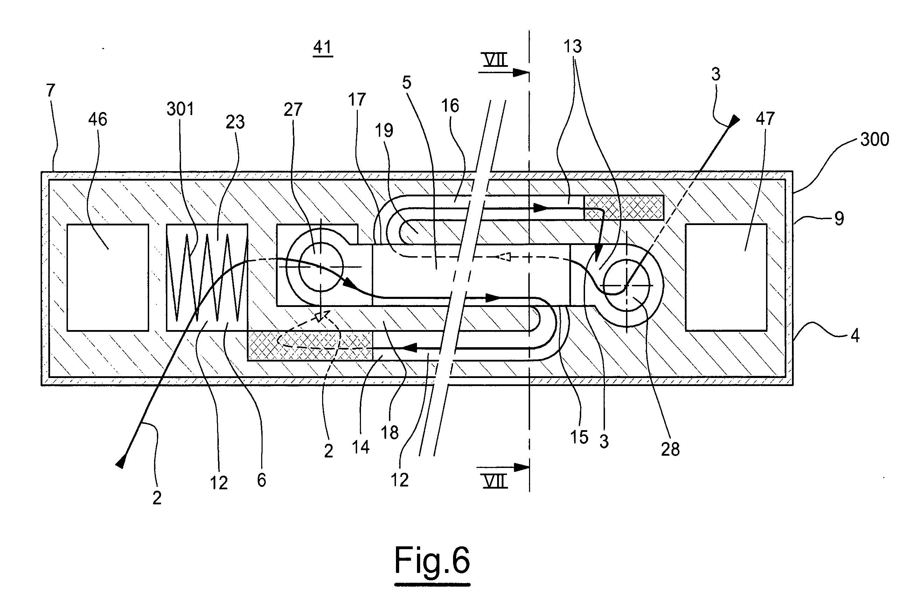

Sur la figure 6, les zones hachurées en croix symbolisent de manière partielle des grilles de sorties de l'air en vue frontale afin de faciliter la lecture de la figure ; sur cette même figure 6, il est possible que pour des raisons de compréhension et de lisibilité de la figure, des éléments ne se trouvant pas dans le plan de coupe aient été ramenés dans ce dernier ; c'est notamment le cas de la résistance de dégivrage 301. La figure 6 représente le dispositif 300 en coupe longitudinale dans un plan parallèle à la surface du mur et vue de l'extérieur 42.

L'enveloppe externe 4 du dispositif 300 représenté sur les figures 5 à 7, hormis les espaces réservés aux organes de fonctionnement et aux conduits tels que décrit plus haut, est avantageusement remplie d'un matériau isolant.

Sur la figure 7, la section transversale du dispositif 300 est sensiblement rectangulaire, mais toute autre section appropriée peut convenir. Le mur 41 représenté sur les figures 5 et 7 comprend une plaque de plâtre 58 du côté intérieur 43.

Le dispositif 300 permet un coût de fabrication moindre que le dispositif 200. Pour les références des figures 5 à 7 non expressément utilisées dans la description à l'égard de ces figures, on pourra se rapporter aux références correspondantes de la description des figures 1 à 4.

Les dispositifs 1, 200, et 300 représentés sur les figures 1 à 7, peuvent être utilisés de plusieurs manières. Des exemples d'utilisation vont maintenant être donnés.

Un exemple d'application du dispositif 1, 200 ou 300 échangeur de chaleur représenté associe ce dernier à une pièce d'une habitation de bureaux ou analogue, en sorte de permettre une ventilation individualisée de la pièce, de la manière suivante :
- le premier fluide 2 est le fluide entrant dans la pièce,
- le deuxième fluide 3 étant le fluide sortant de la pièce,
- les première ouverture d'entrée 6 et deuxième ouverture de sortie 11, respectivement des fluides entrant 2 et sortant 3, s'ouvrent sur l'extérieur 42 de l'habitation, bureaux ou analogue, et
- les deuxième ouverture d'entrée 8 et première ouverture de sortie 10, respectivement des fluides sortant 3 et entrant 2, s'ouvrent sur l'intérieur 43 de la pièce.

Dans un tel exemple d'application, le dispositif 1, 200 ou 300 échangeur de chaleur peut avantageusement être intégré dans l'épaisseur d'une paroi ou d'un mur 41 formant la pièce, comme représenté sur les figures 1 à 7, ou fixé à la surface intérieure de la paroi ou du mur. Dans le cas d'une fixation sur la surface intérieure de la paroi ou du mur, ce dernier doit comporter deux trous traversant pour relier les ouvertures 6 et 11 respectivement des fluides entrant 2 et sortant 3 au milieu extérieur 42.

Dans le cas d'application particulier d'un dispositif intégré dans une paroi ou un mur 41, de manière préférentielle, comme représenté sur les figures 1 à 7,
- le premier fluide 2 ou fluide entrant circule, par rapport à son sens de circulation le long de la paroi d'échange 5, à contre-courant dans le premier tronçon 14 s'étendant de la sortie 15 de la paroi d'échange 5 jusqu'à la première ouverture de sortie 10, et
- le deuxième fluide 3 ou fluide sortant circule, par rapport à son sens de circulation le long de la paroi d'échange 5, à contre-courant dans le deuxième tronçon 16 s'étendant de la sortie 17 de la paroi d'échange 5 jusqu'à la deuxième ouverture 11.

Ainsi, comme représenté sur les figures 1 à 4, le premier tronçon 14 est disposé entre la paroi d'échange 5 et la surface 31 du mur 41 en contact avec le milieu intérieur 43.

Ainsi, comme cela apparaît sur les figures 1 à 4, on rencontre avantageusement du milieu intérieur 43 au milieu extérieur 42, dans l'ordre, les éléments suivants en traversant le mur 41 au niveau du dispositif 1 ou 200 et dans la majeure partie de celui-ci à l'exception de ses extrémités de bout comportant les ouvertures 6, 11, 8, 10 :
- la paroi du boîtier 4 en contact avec le milieu intérieur 43, cette paroi peut être conductrice ou isolante,
- le tronçon 14 du conduit 12 du fluide entrant 2,
- la paroi isolante 18, la paroi d'échange 5, et la paroi isolante 19, afin d'isoler la paroi d'échange 5 en sandwich entre deux parois isolantes en vue d'optimiser le transfert thermique entre les deux fluides entrant et sortant,
- le tronçon 16 du conduit 13 du fluide sortant 3,
- la paroi du boîtier 4 en contact avec la partie du mur 41 en contact avec le milieu extérieur 42,
- la partie de mur 41 en contact avec le milieu extérieur 42.

Dans les exemples d'applications selon les figures 1 à 4, le mur 41 comprend une partie de son épaisseur réalisée en matériau isolant 71, située vers l'intérieur 43 de la construction, et une partie réalisée en matériaux de construction 72, parpaings, briques, ou analogue, située vers l'extérieur 42 de la construction. Le dispositif 1 ou 200 est par exemple monté à cheval sur ces deux parties, en sorte le tronçon 14 du conduit 12 de fluide entrant 2, disposé après la paroi d'échange 5, soit de préférence situé dans une partie isolante du mur. Le dispositif 100 est par exemple monté à cheval sur ces deux parties, en sorte le tronçon 16 du conduit 13 de fluide sortant 3, disposé avant la paroi d'échange 5, soit de préférence situé dans une partie isolante du mur. De manière alternative, le dispositif 1 ou 200 peut être monté dans le mur 41 mais en saillie vers l'intérieur 43, l'axe longitudinal 21 du boîtier 4 étant par exemple aligné avec la surface intérieure du mur 41.

D'autres dispositions sont possibles, notamment comme représenté sur les figures 5 à 7, avec les premier et deuxième conduits, et la paroi d'échange sensiblement situés dans un même plan parallèle à la surface extérieure ou intérieure du mur.

Le dispositif 1, 200 ou 300 échangeur de chaleur peut être intégré dans, ou associé à un mur ou une paroi avec son axe longitudinal en position horizontale ou sensiblement horizontale, ou en position verticale ou sensiblement verticale.

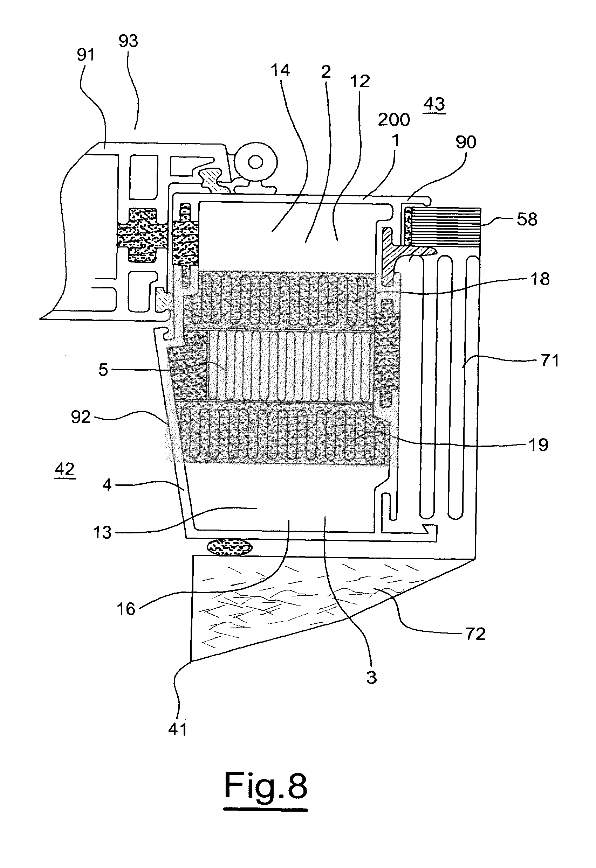

Selon d'autres exemples d'application (en partie non représentés), le dispositif 1, 200 ou 300 échangeur de chaleur peut être intégré dans, ou associé à, l'un des éléments suivants :
- le linteau d'une ouverture d'une pièce, de type fenêtre, porte ou porte-fenêtre, ou analogue,
- le coffre d'un volet roulant,
- l'encadrement d'une ouverture, ouvrant ou dormant, en position verticale ou horizontale, comme représenté sur la figure 8.

Sur la figure 8, qui est à rapprocher par exemple des figures 2 ou 7, en ce qu'elle représente une vue en coupe transversale du dispositif selon l'invention, on retrouve l'échangeur de chaleur, par exemple le dispositif 1, 200, ou 300 dans lequel l'enveloppe externe 4 est constituée de la paroi 92 du montant à rupture de pont thermique de l'ouverture 93, dormant 90 ou ouvrant 91, dans l'exemple représenté, du dormant 90 comportant des ruptures de pont thermique conventionnelles.

Il est à noter que les éléments fonctionnellement identiques à ceux de l'exemple de la figure 1 ou de l'exemple de la figure 3 ou de la figure 5, sont repris sur la figure 8 avec les mêmes références. On pourra donc se référer à la description qui précède pour ces éléments non expressément décrits avec l'aide de la figure 8.

On retrouve sur la figure 8, la paroi 5 d'échange, les isolants 18 et 19 de part et d'autre de cette paroi d'échange 5, et les conduits 12 et 13 pour les fluides entrant 2 et sortant 3 respectivement. Le conduit 14 pour le fluide entrant après son passage sur la paroi d'échange est placé du côté intérieur 43, et le conduit 16 pour le fluide sortant 3 est placé du côté extérieur 42, comme représenté.

La paroi d'échange 5 sur le montage de la figure 8 est de préférence entourée d'isolant, soit rapporté dans le montant, soit formant les barrettes de rupture de pont thermique du dormant lui-même lorsque ce dormant est réalisé avec des profilés métalliques. Les parois 92 généralement métalliques du dormant 90 peuvent ne pas être isolées, comme représenté, dans la mesure où elles se trouvent sensiblement et respectivement à la température du fluide entrant ou sortant qui circule derrière.

De manière alternative, le dispositif 1, 200 ou 300 représenté peut être intégré :
- au plafond horizontalement ou en pente,
- au sol, lorsque l'habitation possède un vide sanitaire suffisant,
- à un ouvrant en toiture.

Dans tous les modes de réalisation du dispositif selon l'invention, notamment représentés sur les figures 1 à 8, il y a lieu de noter qu'il est en outre possible d'intégrer tout moyen connu de chauffage additionnel de l'air entrant 2, selon les besoins, de préférence par un élément de chauffage ou autre de type eau, pompe à chaleur, ou analogue, positionné entre la sortie 15 de la paroi d'échange 5 pour l'air entrant 2 et l'ouverture de sortie 10 de l'air entrant 2, de préférence à proximité de l'ouverture de sortie 10 (non représenté).

Dans tous les modes de réalisation du dispositif selon l'invention, notamment représentés sur les figures 1 à 8, il y a lieu de noter qu'il est en outre possible d'intégrer toute sonde de détection de monoxyde de carbone CO connue (non représentée), de préférence placée dans le premier conduit 12 d'air sortant, avant la paroi d'échange 5, soit entre l'ouverture d'entrée 8 de l'air sortant 3 et l'entrée de ce dernier sur la paroi d'échange 5. Ce détecteur de monoxyde de carbone pourra avantageusement être couplé avec le fonctionnement du ou des moto ventilateurs ou turbines 27, 28 le cas échéant, afin d'augmenter le débit d'entrée d'air neuf passant dans le premier conduit 12 d'air entrant 2, et/ou être couplé avec une alarme permettant d'avertir de la présence d'un taux anormal de monoxyde de carbone, selon les normes en vigueur.

Dans tous les modes de réalisation du dispositif selon l'invention, notamment représentés sur les figures 1 à 8, il y a lieu de noter qu'il est en outre possible d'intégrer tout détecteur de présence connu (non représenté), par exemple à rayonnement infrarouge ou autre, placé à l'extérieur de l'enveloppe externe 4 à un endroit approprié de celle-ci ou en tout autre endroit de la pièce dans laquelle le dispositif selon l'invention est installé, eu égard à l'exercice de la fonction attendue de détection de la présence d'une personne dans ladite pièce. Ce détecteur de présence pourra avantageusement être couplé avec le fonctionnement du ou des moto ventilateurs ou turbines 27, 28 le cas échéant, afin d'asservir le fonctionnement de ces derniers à la présence humaine, en particulier afin d'augmenter leur débit lorsqu'une personne se trouve dans la pièce, avec temporisation de durée associée, ou pas. Un tel dispositif permet une économie d'énergie relative au fonctionnement du ou des moto ventilateurs ou turbines.

Le dispositif selon l'invention offre une économie de consommation énergétique car il permet d'éviter les pertes sur les tuyauteries d'aspiration et de refoulement des installations centralisées.

Par ailleurs, la structure du dispositif selon l'invention permettant un écartement important des ouvertures d'entrée et de sortie des fluides, comme expliqué plus haut, réduit fortement, voire évite, le mélange des fluides entrant et sortant, et optimise ainsi le rendement de l'échangeur essentiellement et relativement à la qualité du renouvellement de l'air d'une pièce.

## Revendications

1. Dispositif (1) échangeur de chaleur entre au moins un premier (2) et un deuxième (3) fluides, comportant :
- une enveloppe externe (4) étanche aux premier et deuxième fluides,
- au moins une paroi (5) d'échange thermique entre les premier et deuxième fluides, logée à l'intérieur de ladite enveloppe externe,
- une première ouverture d'entrée (6), pour le premier fluide (2), formée à une première extrémité (7) de l'enveloppe externe,
- une deuxième ouverture d'entrée (8), pour le deuxième fluide (3), formée à une deuxième extrémité (9) de l'enveloppe externe (4), opposée à la première extrémité (7) de cette dernière,
- ladite enveloppe externe (4) adoptant une forme allongée s'étendant entre ses première (7) et deuxième (9) extrémités,
- ladite paroi d'échange (5) s'étendant entre lesdites première (6) et deuxième (8) ouvertures d'entrées de fluides,
- une première ouverture de sortie (10), pour l'extraction du premier fluide (2) hors de l'enveloppe externe (4),
- une deuxième ouverture de sortie (11), pour l'extraction du deuxième fluide (3) hors de l'enveloppe externe (4),
- un premier conduit (12) pour la circulation du premier fluide (2) à l'intérieur de l'enveloppe externe (4) entre la première ouverture d'entrée (6) et la première ouverture de sortie (10) de celui-ci, dont une partie de paroi est constituée d'une première face de ladite paroi d'échange,
- un deuxième conduit (13) pour la circulation du deuxième fluide (3) à l'intérieur de l'enveloppe externe (4) entre la deuxième ouverture d'entrée (8) et la deuxième ouverture de sortie (11) de celui-ci, dont une partie de paroi est constituée d'une deuxième face de ladite paroi d'échange opposée à la première face,
- lesdits premier et deuxième fluides étant destinés à circuler à contre-courant de part et d'autre de la paroi d'échange,
***caractérisé en ce que** :*
- ladite première ouverture de sortie (10), pour le premier fluide (2), est formée dans la zone de ladite première extrémité (7) de l'enveloppe externe (4),
- ladite deuxième ouverture de sortie (11), pour le deuxième fluide (3), est formée dans la zone de ladite deuxième extrémité (9) de l'enveloppe externe (4),
- en sorte que ladite deuxième ouverture de sortie (11) pour le deuxième fluide (3), et ladite première ouverture d'entrée (6), pour le premier fluide (2), soient séparées d'une distance égale ou supérieure à la longueur (λ) de la paroi d'échange, et
- en sorte que ladite première ouverture de sortie (10) pour le premier fluide (2), et ladite deuxième ouverture d'entrée (8), pour le deuxième fluide (3), soient séparées d'une distance égale ou supérieure à la longueur (λ) de la paroi d'échange.

2. Dispositif (1) échangeur de chaleur selon la revendication 1, ***caractérisé en ce que :***
- lesdites première ouverture d'entrée (6) pour le premier fluide (2), et deuxième ouverture de sortie (11) pour le deuxième fluide (3), sont situées d'un même premier côté (30) de ladite enveloppe externe (4),
- lesdites deuxième ouverture d'entrée (8) pour le deuxième fluide (3), et première ouverture de sortie (10) pour le premier fluide (2), étant situées d'un même deuxième côté (31) de ladite enveloppe externe (4), opposé au premier côté (30).

3. Dispositif (1) échangeur de chaleur selon la revendication 1 ou 2, ***caractérisé en ce que :***
- ledit premier conduit (12) pour le premier fluide (2) comporte un premier tronçon (14) s'étendant le long de la paroi d'échange (5) sans entrer en contact avec cette dernière, et **en ce que**
- ledit deuxième conduit (13) pour le deuxième fluide (3) comporte un deuxième tronçon (16) s'étendant le long de la paroi d'échange (5), sans entrer en contact avec cette dernière.

4. Dispositif (1) échangeur de chaleur selon la revendication 3, ***caractérisé en ce que** :*
- ledit premier tronçon (14) s'étend de la paroi d'échange (5) jusqu'à la première ouverture de sortie (10), longeant la paroi d'échange et parallèle à celle-ci, et **en ce que**
- ledit deuxième tronçon (16) s'étend de la paroi d'échange (5) jusqu'à la deuxième ouverture de sortie (11), longeant la paroi d'échange et parallèle à celle-ci.

5. Dispositif (1) échangeur de chaleur selon l'une quelconque des revendications 1 à 4, ***caractérisé en ce qu**'*il comprend en outre :
- une première paroi isolante (18) disposée entre la paroi d'échange (5) et ledit premier tronçon (14) du premier conduit (12), et
- une deuxième paroi isolante (19) disposée entre la paroi d'échange (5) et ledit deuxième tronçon (16) du deuxième conduit (13),
- lesdites première (18) et deuxième (19) parois isolantes étant disposées de part et d'autre de la paroi d'échange (5) et au moins sur la longueur de celle-ci.

6. Dispositif échangeur de chaleur selon l'une quelconque des revendications 1 à 5, ***caractérisé en ce que :***
- ladite première ouverture d'entrée (6) pour le premier fluide (2) et ladite première ouverture de sortie (10) pour le premier fluide (2) sont disposées sur l'enveloppe externe (4) sensiblement de manière opposée, afin que l'entrée et la sortie du premier fluide (2) soient sensiblement effectuées suivant une première direction (20) perpendiculaire ou sensiblement perpendiculaire à un axe longitudinal (21) d'extension de l'enveloppe externe (4) de forme allongée, et **en ce que**
- ladite deuxième ouverture d'entrée (8) pour le deuxième fluide (3) et ladite deuxième ouverture de sortie (11) pour le deuxième fluide (3) sont disposées sur l'enveloppe externe (4) sensiblement de manière opposée, afin que l'entrée et la sortie du deuxième fluide (3) soient sensiblement effectuées suivant une deuxième direction (22) perpendiculaire ou sensiblement perpendiculaire à un axe longitudinal (21) d'extension de l'enveloppe externe (4) de forme allongée.

7. Dispositif échangeur de chaleur selon la revendication 6, ***caractérisé en ce que*** lesdites première (20) et deuxième (22) directions sont parallèles ou sensiblement parallèles.

8. Dispositif échangeur (200) de chaleur selon l'une quelconque des revendications 1 à 7, ***caractérisé en ce qu'***il comprend en outre des moyens de vanne (80) aptes à obturer ledit deuxième conduit (13) à la sortie (17) de la première face de ladite paroi d'échange (5), afin de détourner le deuxième fluide (3), ou fluide sortant, dans ledit premier conduit (12), pour faire passer ledit fluide sortant (3) sur la deuxième face de ladite paroi d'échange (5).

9. Dispositif échangeur (300) de chaleur selon l'une quelconque des revendications 1 à 7, ***caractérisé en ce qu'***il comprend en outre des moyens de résistance électrique (301) disposés dans ledit premier conduit (12) à proximité de la première ouverture d'entrée (6), afin de réchauffer le premier fluide (2) ou fluide entrant avant son passage sur la paroi d'échange.

10. Dispositif échangeur (300) de chaleur selon l'une quelconque des revendications 1 à 7, ***caractérisé en ce qu'***il comprend en outre des moyens de résistance électrique disposés dans ledit deuxième conduit (13) à proximité de la deuxième ouverture d'entrée (8) pour le deuxième fluide (3), afin de fournir un apport thermique au deuxième fluide (2) ou fluide sortant avant son passage sur la paroi d'échange.

11. Dispositif échangeur de chaleur selon l'une quelconque des revendications 1 à 10, ***caractérisé en ce qu**'*il comprend en outre :
- des premiers moyens de filtre (23) pour le premier fluide (2), disposés dans l'enveloppe externe (4) en travers dudit premier conduit (12) de circulation du premier fluide (2) dans l'enveloppe externe, entre l'ouverture d'entrée (6) du premier fluide dans l'enveloppe externe (4) et l'entrée (24) du premier fluide (2) sur la paroi d'échange (5), et
- des deuxièmes moyens de filtre (25) pour le deuxième fluide (3), disposés dans l'enveloppe externe (4) en travers dudit deuxième conduit (13) de circulation du deuxième fluide (3) dans l'enveloppe externe (4), entre l'ouverture d'entrée (8) du deuxième fluide (3) dans l'enveloppe externe (4) et l'entrée (26) du deuxième fluide (3) sur la paroi d'échange (5).

12. Dispositif échangeur de chaleur selon l'une quelconque des revendications 1 à 11, ***caractérisé en ce qu**'*il comprend en outre au moins l'un des premiers et deuxièmes moyens de moto ventilateurs suivants :
- des premiers moyens de moto ventilateur (27) disposés dans ledit premier conduit (12), afin de générer une circulation du premier fluide (2) dans ce dernier, et
- des deuxièmes moyens de moto ventilateur (28) disposés dans ledit deuxième conduit (13), afin de générer une circulation du deuxième fluide (3) dans ce dernier.

13. Dispositif échangeur de chaleur selon la revendication 12, ***caractérisé en ce** q**u**'il* comprend en outre des moyens générateurs d'électricité (35), disposés au moins en partie devant ladite première ouverture d'entrée (6), ou devant ladite deuxième ouverture de sortie (11), en vue d'alimenter de manière autonome en électricité, lesdits premiers (27) et deuxièmes (28) moyens de moto ventilateur.

14. Dispositif échangeur de chaleur selon la revendication 13, ***caractérisé en ce que*** lesdits moyens générateurs d'électricité (35) comprennent des cellules photovoltaïques (48, 49).

15. Dispositif échangeur de chaleur selon l'une quelconque des revendications 1 à 14, ***caractérisé en ce qu**'*il comprend des moyens pour évacuer les condensats par ladite première ouverture d'entrée (6) du premier fluide (2).

16. Application d'un dispositif échangeur de chaleur selon l'une des revendications 1 à 15, ***caractérisée en ce que*** ledit dispositif échangeur est associé à une pièce d'une habitation de bureaux ou analogue, en sorte de permettre une ventilation individualisée de ladite pièce :
- ledit premier fluide (2) étant le fluide entrant dans ladite pièce,
- ledit deuxième fluide (3) étant le fluide sortant de ladite pièce,
- lesdites première ouverture d'entrée (6) et deuxième ouverture de sortie (11), respectivement des premier (2) et deuxième (3) fluides, s'ouvrant sur l'extérieur de l'habitation, bureaux ou analogue, et
- lesdites deuxième ouverture d'entrée (8) et première ouverture de sortie (10), respectivement des deuxième (3) et premier (2) fluides, s'ouvrant sur l'intérieur de ladite pièce.

17. Application selon la revendication 16, ***caractérisée en ce que*** ledit dispositif échangeur de chaleur est intégré dans l'épaisseur d'une paroi ou d'un mur (41) formant ladite pièce, ou fixé à la surface intérieure de ladite paroi.

18. Application selon la revendication 17, pour un dispositif (1) selon la revendication 4, ***caractérisée en ce que*** ledit dispositif est intégré dans un mur (41), et **en ce que** :
- ledit premier fluide (2) ou fluide entrant circule, par rapport à son sens de circulation le long de la paroi d'échange (5), à contre-courant dans ledit premier tronçon (14) s'étendant de la sortie (15) de la paroi d'échange (5) jusqu'à la première ouverture de sortie (10), et **en ce que**
- ledit deuxième fluide (3) ou fluide sortant circule, par rapport à son sens de circulation le long de la paroi d'échange (5), à contre-courant dans ledit deuxième tronçon (16) s'étendant de la sortie (17) de la paroi d'échange (5) jusqu'à la deuxième ouverture (11).

19. Application selon la revendication 18, ***caractérisée en ce que*** ledit premier tronçon (14) est disposé entre la paroi d'échange (5) et la surface (31) du mur (41) en contact avec le milieu intérieur (43).

20. Application selon l'une quelconque des revendications 16 à 19, ***caractérisée en ce que*** ledit dispositif (1) échangeur de chaleur est intégré dans, ou associé à, l'un des éléments suivants :
- linteau d'une ouverture de ladite pièce, de type fenêtre, porte ou porte fenêtre, ou analogue,
- coffre de volet roulant,
- encadrement d'une ouverture, ouvrant ou dormant.

21. Application selon l'une des revendications 16 à 20, ***caractérisée en ce que*** qu'un axe longitudinal dudit dispositif (1) échangeur de chaleur est disposé horizontalement ou sensiblement horizontalement.

22. Application selon l'une des revendications 16 à 20, ***caractérisée en ce que*** qu'un axe longitudinal dudit dispositif (1) échangeur de chaleur est disposé verticalement ou sensiblement verticalement.

## Patentansprüche

1. Vorrichtung (1) zum Wärmeaustausch zwischen wenigstens einem ersten (2) und einem zweiten (3) Fluid, umfassend:
- einen Außenmantel (4), der gegenüber dem ersten und zweiten Fluid dicht ist,
- wenigstens eine Wand (5) zum Wärmeaustausch zwischen dem ersten und zweiten Fluid, die im Inneren des Außenmantels angeordnet ist,
- eine erste Einlassöffnung (6) für das erste Fluid (2), die an einem ersten Ende (7) des Außenmantels gebildet ist,
- eine zweite Einlassöffnung (8) für das zweite Fluid (3), die an einem zweiten Ende (9) des Außenmantels (4) gebildet ist, das seinem erste Ende (7) gegenüberliegt,
- wobei der Außenmantel (4) eine langgestreckte Form aufweist, die sich zwischen seinem ersten (7) und zweiten (9) Ende erstreckt,
- wobei sich die Austauschwand (5) zwischen der ersten (6) und zweiten (8) Fluideinlassöffnung erstreckt,
- eine erste Auslassöffnung (10), um das erste Fluid (2) aus dem Außenmantel (4) abzulassen,
- eine zweite Auslassöffnung (11), um das zweite Fluid (3) aus dem Außenmantel (4) abzulassen,
- eine erste Leitung (12) zur Zirkulation des ersten Fluids (2) im Inneren des Außenmantels (4) zwischen seiner ersten Einlassöffnung (6) und seiner ersten Auslassöffnung (10), wobei ein Teil ihrer Wand durch eine erste Seite der Austauschwand gebildet wird,
- eine zweite Leitung (13) zur Zirkulation des zweiten Fluids (3) im Inneren des Außenmantels (4) zwischen seiner zweiten Einlassöffnung (8) und seiner zweiten Auslassöffnung (11), wobei ein Teil ihrer Wand durch eine zweite Seite der Austauschwand gebildet wird, die der ersten Seite gegenüberliegt,
- wobei das erste und zweite Fluid dazu bestimmt sind, in Gegenströmung zu beiden Seiten der Austauschwand zu zirkulieren,
**dadurch gekennzeichnet, dass**:
- die erste Auslassöffnung (10) für das erste Fluid (2) im Bereich des ersten Endes (7) des Außenmantels (4) gebildet ist,
- die zweite Auslassöffnung (11) für das zweite Fluid (3) im Bereich des zweiten Endes (9) des Außenmantels (4) gebildet ist,
- so dass die zweite Auslassöffnung (11) für das zweite Fluid (3) und die erste Einlassöffnung (6) für das erste Fluid (2) mit einem Abstand voneinander beabstandet sind, der gleich oder größer als die Länge (λ) der Austauschwand ist, und
- so dass die erste Auslassöffnung (10) für das erste Fluid (2) und die zweite Einlassöffnung (8) für das zweite Fluid (3) mit einem Abstand voneinander beabstandet sind, der gleich oder größer als die Länge (λ) der Austauschwand ist.

2. Wärmeaustauschvorrichtung (1) nach Anspruch 1, **dadurch gekennzeichnet, dass**:
- die erste Einlassöffnung (6) für das erste Fluid (2) und die zweite Auslassöffnung (11) für das zweite Fluid (3) an der gleichen ersten Seite (30) des Außenmantels (4) angeordnet sind,
- die zweite Einlassöffnung (8) für das zweite Fluid (3) und die erste Auslassöffnung (10) für das erste Fluid (2) an einer gleichen zweiten Seite (31) des Außenmantels (4) angeordnet sind, die der ersten Seite (30) gegenüberliegt.

3. Wärmeaustauschvorrichtung (1) nach Anspruch 1 oder 2, **dadurch gekennzeichnet, dass**:
- die erste Leitung (12) für das erste Fluid (2) einen ersten Abschnitt (14) umfasst, der sich entlang der Austauschwand (5) erstreckt, ohne in Kontakt mit ihr zu treten, und dass
- die zweite Leitung (13) für das zweite Fluid (3) einen zweiten Abschnitt (16) umfasst, der sich entlang der Austauschwand (5) erstreckt, ohne in Kontakt mit dieser zu treten.

4. Wärmeaustauschvorrichtung (1) nach Anspruch 3, **dadurch gekennzeichnet, dass**:
- sich der erste Abschnitt (14) von der Austauschwand (5) bis zur ersten Auslassöffnung (10) erstreckt, wobei er an der Austauschwand entlang parallel zu dieser verläuft, und dass
- sich der zweite Abschnitt (16) von der Austauschwand (5) bis zur zweiten Auslassöffnung (11) erstreckt, wobei er an der Austauschwand entlang parallel zu dieser verläuft.

5. Wärmeaustauschvorrichtung (1) nach einem der Ansprüche 1 bis 4, **dadurch gekennzeichnet, dass** sie ferner Folgendes umfasst:
- eine erste isolierende Wand (18), die zwischen der Austauschwand (5) und dem ersten Abschnitt (14) der ersten Leitung (12) angeordnet ist, und
- eine zweite isolierende Wand (19), die zwischen der Austauschwand (5) und dem zweiten Abschnitt (16) der zweiten Leitung (13) angeordnet ist,
- wobei die erste (18) und die zweite (19) isolierende Wand zu beiden Seiten der Austauschwand (5) und wenigstens über deren Länge angeordnet sind.

6. Wärmeaustauschvorrichtung nach einem der Ansprüche 1 bis 5, **dadurch gekennzeichnet, dass**:
- die erste Einlassöffnung (6) für das erste Fluid (2) und die erste Auslassöffnung (10) für das erste Fluid (2) am Außenmantel (4) im Wesentlichen auf einander entgegengesetzte Weise angeordnet sind, damit der Einlass und der Auslass des ersten Fluids (2) im Wesentlichen in einer ersten Richtung (20) erfolgen, die senkrecht oder im Wesentlichen senkrecht zu einer Längserstreckungsachse (21) des langgestreckten Außenmantels (4) ist, und dass
- die zweite Einlassöffnung (8) für das zweite Fluid (3) und die zweite Auslassöffnung (11) für das zweite Fluid (3) am Außenmantel (4) im Wesentlichen auf einander entgegengesetzte Weise angeordnet sind, damit der Einlass und der Auslass des zweiten Fluids (3) im Wesentlichen in einer zweiten Richtung (22) erfolgen, die senkrecht oder im Wesentlichen senkrecht zu einer Längserstreckungsachse (21) des langgestreckten Außenmantels (4) ist.

7. Wärmeaustauschvorrichtung nach Anspruch 6, **dadurch gekennzeichnet, dass** die erste (20) und die zweite (22) Richtung parallel oder im Wesentlichen parallel sind.

8. Wärmeaustauschvorrichtung (200) nach einem der Ansprüche 1 bis 7, **dadurch gekennzeichnet, dass** sie darüber hinaus Schiebermittel (80) umfasst, die geeignet sind, die zweite Leitung (13) am Auslass (17) der ersten Seite der Austauschwand (5) zu verschließen, um das zweite Fluid (3) oder austretende Fluid in die erste Leitung (12) umzuleiten, um das austretende Fluid (3) an der zweiten Seite der Austauschwand (5) strömen zu lassen.

9. Wärmeaustauschvorrichtung (300) nach einem der Ansprüche 1 bis 7, **dadurch gekennzeichnet, dass** sie darüber hinaus elektrische Widerstandsmittel (301) umfasst, die in der ersten Leitung (12) in der Nähe der ersten Einlassöffnung (6) angeordnet sind, um das erste Fluid (2) oder eintretende Fluid vor seinem Durchlauf an der Austauschwand zu erwärmen.

10. Wärmeaustauschvorrichtung (300) nach einem der Ansprüche 1 bis 7, **dadurch gekennzeichnet, dass** sie darüber hinaus elektrische Widerstandsmittel umfasst, die in der zweiten Leitung (13) in der Nähe der zweiten Einlassöffnung (8) für das zweite Fluid (3) angeordnet sind, um dem zweiten Fluid (2) oder austretenden Fluid vor seinem Durchlauf an der Austauschwand Wärme zuzuführen.

11. Wärmeaustauschvorrichtung nach einem der Ansprüche 1 bis 10, **dadurch gekennzeichnet, dass** sie darüber hinaus Folgendes umfasst:
- erste Filtermittel (23) für das erste Fluid (2), die im Außenmantel (4) quer über die erste Leitung (12) zur Zirkulation des ersten Fluids (2) im Außenmantel zwischen der Einlassöffnung (6) des ersten Fluids im Außenmantel (4) und dem Einlass (24) des ersten Fluids (2) in der Austauschwand (5) angeordnet sind, und
- zweite Filtermittel (25) für das zweite Fluid (3), die im Außenmantel (4) quer über die zweite Leitung (13) zur Zirkulation des zweiten Fluids (3) im Außenmantel (4) zwischen der Einlassöffnung (8) des zweiten Fluids (3) im Außenmantel (4) und dem Einlass (26) des zweiten Fluids (3) in der Austauschwand (5) angeordnet sind.

12. Wärmeaustauschvorrichtung nach einem der Ansprüche 1 bis 11, **dadurch gekennzeichnet, dass** sie darüber hinaus wenigstens eines der folgenden ersten und zweiten Elektrolüftermittel umfasst:
- erste Elektrolüftermittel (27), die in der ersten Leitung (12) angeordnet sind, um eine Zirkulation des ersten Fluids (2) in ihr zu bewirken, und
- zweite Elektrolüftermittel (28), die in der zweiten Leitung (13) angeordnet sind, um eine Zirkulation des zweiten Fluids (3) in ihr zu bewirken.

13. Wärmeaustauschvorrichtung nach Anspruch 12, **dadurch gekennzeichnet, dass** sie darüber hinaus Mittel zur Erzeugung von Elektrizität (35) umfasst, die wenigstens teilweise vor der ersten Einlassöffnung (6) oder vor der zweiten Auslassöffnung (11) angeordnet sind, um das erste (27) und zweite (28) Elektrolüftermittel auf autonome Weise mit Elektrizität zu versorgen.

14. Wärmeaustauschvorrichtung nach Anspruch 13, **dadurch gekennzeichnet, dass** die Mittel zur Erzeugung von Elektrizität (35) Photovoltaikzellen (48, 49) umfassen.

15. Wärmeaustauschvorrichtung nach einem der Ansprüche 1 bis 14, **dadurch gekennzeichnet, dass** sie Mittel zum Abführen der Kondensate durch die erste Einlassöffnung (6) für das erste Fluid (2) umfasst.

16. Anwendung einer Wärmeaustauschvorrichtung nach einem der Ansprüche 1 bis 15, **dadurch gekennzeichnet, dass** die Austauschvorrichtung mit einem Raum eines Wohn- oder Bürogebäudes oder dergleichen verbunden ist, um eine individuelle Belüftung des Raums zu ermöglichen:
- wobei es sich bei dem ersten Fluid (2) um das in den Raum eintretende Fluid handelt,
- wobei es sich bei dem zweiten Fluid (3) um das aus dem Raum austretende Fluid handelt,
- wobei sich die erste Einlassöffnung (6) und die zweite Auslassöffnung (11) für das erste (2) und zweite (3) Fluid zum Äußeren des Wohn- oder Bürogebäudes oder dergleichen hin öffnen, und
- wobei sich die zweite Einlassöffnung (8) und die erste Auslassöffnung (10) für das zweite (3) und erste (2) Fluid zum Inneren des Raumes hin öffnen.

17. Anwendung nach Anspruch 16, **dadurch gekennzeichnet, dass** die Wärmeaustauschvorrichtung in die Dicke einer Wand oder einer Mauer (41) integriert ist, die den Raum bildet, oder an der Innenseite der Wand befestigt ist.

18. Anwendung nach Anspruch 17 für eine Vorrichtung (1) nach Anspruch 4, **dadurch gekennzeichnet, dass** die Vorrichtung in eine Mauer (41) integriert ist und dass:
- das erste Fluid (2) oder eintretende Fluid im ersten Abschnitt (14), der sich vom Auslass (15) der Austauschwand (5) bis zur ersten Auslassöffnung (10) erstreckt, in Bezug auf seine Zirkulationsrichtung entlang der Austauschwand (5) in entgegengesetzter Richtung zirkuliert und dass
- das zweite Fluid (3) oder austretende Fluid im zweiten Abschnitt (16), der sich vom Auslass (17) der Austauschwand (5) bis zur zweiten Öffnung (11) erstreckt, in Bezug auf seine Zirkulationsrichtung entlang der Austauschwand (5) in entgegengesetzter Richtung zirkuliert.

19. Anwendung nach Anspruch 18, **dadurch gekennzeichnet, dass** der erste Abschnitt (14) zwischen der Austauschwand (5) und der Oberfläche (31) der Mauer (41) angeordnet ist, die sich in Kontakt mit dem Innenraum (43) befindet.

20. Anwendung nach einem der Ansprüche 16 bis 19, **dadurch gekennzeichnet, dass** die Wärmeaustauschvorrichtung (1) in eines der folgenden Elemente integriert ist oder damit verbunden ist:
- in den Sturz einer Öffnung des Raums vom Typ Fenster, Tür, Fenstertür oder dergleichen,
- in einen Rolladenkasten,
- in einen Flügelrahmen oder Blendrahmen einer Öffnung.

21. Anwendung nach einem der Ansprüche 16 bis 20, **dadurch gekennzeichnet, dass** eine Längsachse der Wärmeaustauschvorrichtung (1) horizontal oder im Wesentlichen horizontal angeordnet ist.

22. Anwendung nach einem der Ansprüche 16 bis 20, **dadurch gekennzeichnet, dass** eine Längsachse der Wärmeaustauschvorrichtung (1) vertikal oder im Wesentlichen vertikal angeordnet ist.

## Claims

1. Device (1) enabling the exchange of heat between at least one first (2) and one second fluid (3), said device including:
- an outer casing (4) sealed against the first and second fluids,
- at least one partition wall (5) enabling the exchange of heat between the first and second fluids, said wall being housed inside said outer casing,
- a first inlet opening (6), for the first fluid (2), formed at a first end (7) of the outer casing,
- a second inlet opening (8), for the second fluid (3), formed at a second end (9) of the outer casing (4), opposite the first end (7) of said casing,
- said outer casing (4) having a long shape extending between its first (7) and second (9) ends,
- said exchange wall (5) extending between said first (6) and second (8) fluid inlet openings,
- a first outlet opening (10), for extracting the first fluid (2) from the outer casing (4),
- a second outlet opening (11), for extracting the second fluid (3) from the outer casing (4),
- a first pipe (12) enabling the first fluid (2) to flow inside the outer casing (4) between the first inlet opening (6) and the first outlet opening (10) of said first fluid, part of the wall of said pipe being made up by a first face of said exchange wall,
- a second pipe (13) enabling the second fluid (3) to flow inside the outer casing (4) between the second inlet opening (8) and the second outlet opening (11) of said second fluid, part of the wall of said pipe being up by a second face of said exchange wall opposite the first face,
- said first and said second fluids being intended to flow in a counter-current manner on both sides of the exchange wall,
**characterised in that**:
- said first outlet opening (10), for the first fluid (2), is formed in the region of said first end (7) of the outer casing (4),
- said second outlet opening (11), for the second fluid (3), is formed in the region of said second end (9) of the outer casing (4),
- in such a manner that said second outlet opening (11) for the second fluid (3), and said first inlet opening (6), for the first fluid (2), are separated by a distance equal to or greater than the length (λ) of the exchange wall, and
- in such a manner that said first outlet opening (10) for the first fluid (2), and said second inlet opening (8), for the second fluid (3), are separated by a distance equal to or greater than the length (λ) of the exchange wall.

2. Device (1) enabling the exchange of heat according to claim 1, **characterised in that**:
- said first inlet opening (6) for the first fluid (2), and said second outlet opening (11) for the second fluid (3), are situated on a same first side (30) of said outer casing (4),
- said second inlet opening (8) for the second fluid (3), and said first outlet opening (10) for the first fluid (2), being situated on a same second side (31) of said outer casing (4), opposite the first side (30).

3. Device (1) enabling the exchange of heat according to claim 1 or 2, **characterised in that**:
- said first pipe (12) for the first fluid (2) includes a first segment (14) which extends along the exchange wall (5) without contacting said exchange wall, and **in that**
- said second pipe (13) for the second fluid (3) includes a second segment (16) that extends along the exchange wall (5), without contacting said exchange partition wall.

4. Device (1) enabling the exchange of heat according to claim 3, **characterised in that**:
- said first segment (14) extends from the exchange wall (5) as far as the first outlet opening (10), following the exchange wall and parallel to said exchange wall, and **in that**
- said second segment (16) extends from the exchange wall (5) as far as the second outlet opening (11), following the exchange wall and parallel to said exchange wall.

5. Device (1) enabling the exchange of heat according to anyone of claims 1-4, **characterised in that** said device also comprises:
- a first insulating wall (18) disposed between the exchange wall (5) and said first segment (14) of the first pipe (12), and
- a second insulating wall (19) disposed between the exchange wall (5) and said second segment (16) of the second pipe (13),
- said first (18) and said second (19) insulating walls being disposed on both sides of the exchange wall (5) and at least along the length of said exchange wall.

6. Device enabling the exchange of heat according to anyone of claims 1-5, **characterised in that**:
- said first inlet opening (6) for the first fluid (2) and said first outlet opening (10) for the first fluid (2) are disposed on the outer casing (4) approximately in an opposite manner, so that the inlet and the outlet of the first fluid (2) are approximately carried out following a first direction (20) perpendicular or approximately perpendicular to a longitudinal axis (21) of extension of the outer casing (4) with a long shape, and **in that**
- said second inlet opening (8) for the second fluid (3) and said second outlet opening (11) for the second fluid (3) are disposed on the outer casing (4) approximately in an opposite manner, so that the inlet and outlet of the second fluid (3) are approximately carried out following a second direction (22) perpendicular or approximately perpendicular to a longitudinal axis (21) of extension of the outer casing (4) with a long shape.

7. Device enabling the exchange of heat according to claim 6, **characterised in that** said first (20) and said second (22) directions are parallel or approximately parallel.

8. Device (200) enabling the exchange of heat according to anyone of claims 1-7, **characterised in that** said device also comprises valve means (80) capable of sealing said second pipe (13) at the outlet (17) of the first face of said exchange wall (5) so as to divert the second fluid (3), or the outgoing fluid, in said first pipe (12), in order to move said outgoing fluid (3) over the second face of said exchange wall (5).

9. Device (300) enabling the exchange of heat according to anyone of claims 1-7, **characterised in that** said device also comprises electric resistance means (301) disposed in said first pipe (12) in the vicinity of the first inlet opening (6), so as to reheat the first fluid (2) or the incoming fluid before it moves along the exchange partition wall.

10. Device (300) enabling the exchange of heat according to anyone of claims 1-7, **characterised in that** said device also comprises electric resistance means disposed in said second pipe (13) in the vicinity of the second inlet opening (8) for the second fluid (3), so as to supply an injection of heat to the second fluid (2) or the outgoing fluid before it moves along the exchange partition wall.

11. Device enabling the exchange of heat according to anyone of claims 1-10, **characterised in that** said device also comprises:
- first filtering means (23) for the first fluid (2), disposed in the outer casing (4) across said first pipe (12) enabling the first fluid (2) to flow in the outer casing, between the inlet opening (6) of the first fluid in the outer casing (4) and the inlet (24) of the first fluid (2) on the exchange partition wall (5), and
- second filtering means (25) for the second fluid (3), disposed in the outer casing (4) across said second pipe (13) enabling the second fluid (3) to flow in the outer casing (4), between the inlet opening (8) of the second fluid (3) in the outer casing (4) and the inlet (26) of the second fluid (3) on the exchange partition wall (5).

12. Device enabling the exchange of heat according to anyone of claims 1-11, **characterised in that** said device also comprises at least one of the first and second electric fan means below:
- first electric fan means (27) disposed in said first pipe (12), so as to generate a flow of the first fluid (2) in said pipe, and
- second electric fan means (28) disposed in said second pipe (13), so as to generate a flow of the second fluid (3) in said pipe.

13. Device enabling the exchange of heat according to claim 12, **characterised in that** said device also comprises electricity generating means (35), disposed at least in part in front of said first inlet opening (6), or in front of said second outlet opening (11), so as to supply said first (27) and second (28) electric fan means with electricity in an independent manner.

14. Device enabling the exchange of heat according to claim 13, **characterised in that** said electricity generating means (35) comprise photovoltaic cells (48, 49).

15. Device enabling the exchange of heat according to anyone of claims 1-14, **characterised in that** said device includes means for draining off the condensates through said first inlet opening (6) of the first fluid (2).

16. Use of a device enabling the exchange of heat according to anyone of claims 1-15, **characterised in that** said device enabling the exchange is associated with a room in a house, offices or the like, so as to allow individualized ventilation of said room:
- said first fluid (2) being the fluid coming into said room,
- said second fluid (3) being the fluid leaving said room,
- said first inlet opening (6) and second outlet opening (11), of the first (2) and second (3) fluids respectively, opening out onto the outside of the house, offices or the like, and
- said second inlet opening (8) and first outlet opening (10), of the second (3) and first (2) fluids respectively, opening out onto the inside of said room.

17. Use according to claim 16, **characterised in that** said device enabling the exchange of heat is installed in the thickness of a partition wall or a wall (41) forming said room, or is secured to the inside surface of said partition wall.

18. Use according to claim 17 for a device (1) according to claim 4, **characterised in that** said device is installed in a wall (41), and **in that**:
- said first fluid (2) or the incoming fluid, compared with its direction of flow along the exchange wall (5), flows in a counter-current manner in said first segment (14) extending from the outlet (15) of the exchange wall (5) as far as the first outlet opening (10), and **in that**
- said second fluid (3) or the outgoing fluid, compared with its direction of flow along the exchange wall (5), flows in a counter-current manner in said second segment (16) extending from the outlet (17) of the exchange wall (5) as far as the second opening (11).

19. Use according to claim 18, **characterised in that** said first segment (14) is disposed between the exchange wall (5) and the surface (31) of the wall (41) in contact with the inside environment (43).

20. Use according to anyone of claims 16-19, **characterised in that** said device (1) enabling the exchange of heat is installed in, or associated with, one of the following elements:
- a lintel of an opening of said room, of the window, door or French window type, or the like,
- a roller blind box,
- a frame of an opening that has an opening frame or a fixed frame.

21. Use according to anyone of claims 16-20, **characterised in that** a longitudinal axis of said device (1) for exchanging heat is disposed horizontally or approximately horizontally.

22. Use according to anyone of claims 16-20, **characterised in that** a longitudinal axis of said device (1) for exchanging heat is disposed vertically or approximately vertically.
